# EUROPEAN PATENT APPLICATION

(11) **EP 4 380 208 A1**
(43) Date of publication of application: **05.06.2024**
(21) Application number: 22852091.2
(22) Date of filing: 30.07.2022
(51) Int. Cl.: H04W 8/14, H04W 36/00

(54) **COMMUNICATION METHOD AND APPARATUS**

(30) Priority: 03.08.2021 CN 202110886808
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN)
(74) Representative: Pfenning, Meinig & Partner mbB
(86) International application number: PCT/CN2022/109284
(87) International publication number: WO 2023/011378

(57) **Abstract**

This application relates to a communication method and apparatus. A first message from a network device is received, where the first message is for querying whether a first terminal device can provide a relay service; or the first message includes configuration information, and the configuration information is for configuring the first terminal device to provide a relay service for a second terminal device. A second message is sent to the network device. When the first message is for querying whether the first terminal device can provide the relay service, the second message indicates whether the first terminal device can provide the relay service; or when the first message includes the configuration information, the second message indicates whether configuration of the first terminal device is completed, or indicates whether the first terminal device can provide the relay service. If the first terminal device refuses to provide the relay service, because the network device can also learn of the case, the first terminal device does not need to enter an RRC reestablishment procedure, but can continue to work normally within coverage of the network device, to improve service quality of the first terminal device.

## Description

### TECHNICAL FIELD

This application relates to the field of communication technologies, and in particular, to a communication method and apparatus.

### BACKGROUND

In a user equipment (user equipment, UE) relay (relay) technology proposed currently, there is a relay manner in which remote (remote) UE is visible to a radio access network (radio access network, RAN). In the relay manner, the remote UE can implement a path switch (path switch), or in other words, implement a link (link) switch. For example, the remote UE may switch from a direct link (direct link) to a base station to an indirect link (indirect link) for indirect communication with the base station. The indirect link herein is a relay link. To be specific, the remote UE is connected to the base station via relay UE.

A path switch process of the remote UE includes a process of switching from the direct link to the indirect link, a process of switching from the indirect link to the direct link, and a process of switching between indirect links. In a case of switching to the indirect link (including switching from the direct link to the indirect link or switching between the indirect links), a mainstream solution currently discussed is as follows: The base station configures the remote UE to perform measurement, the remote UE sends a measurement result to the base station, and the base station determines whether the remote UE is to perform the path switch. If the base station determines that the remote UE is to perform the path switch, the base station separately sends configuration information to the remote UE and the relay UE, to configure the path switch.

In the path switch manner, if the relay UE refuses a related configuration, for example, the relay UE refuses to provide a relay service for the remote UE, the relay UE needs to perform processing based on a configuration failure case. Specifically, the relay UE enters a radio resource control (radio resource control, RRC) reestablishment (reestablishment) procedure, and can continue to work only after RRC reestablishment succeeds. It is clear that this causes deterioration of service quality of the relay UE.

### SUMMARY

Embodiments of this application provide a communication method and apparatus, to improve service quality of relay UE.

According to a first aspect, a first communication method is provided. The method may be performed by a first terminal device, or may be performed by a chip system, where the chip system can implement a function of the first terminal device. The first terminal device is, for example, a terminal device that provides a relay service for another terminal device in a relay scenario. The method includes: receiving a first message from a network device, where the first message is for querying whether the first terminal device can provide a relay service; or the first message includes configuration information, and the configuration information is for configuring the first terminal device to provide a relay service for a second terminal device; and sending a second message to the network device, where when the first message is for querying whether the first terminal device can provide the relay service, the second message indicates whether the first terminal device can provide the relay service; or when the first message includes the configuration information, the second message indicates whether configuration of the first terminal device is completed, or the second message indicates whether the first terminal device can provide the relay service.

In this embodiment of this application, regardless of whether the first terminal device can provide the relay service for the second terminal device, the first terminal device can send the second message to the network device for notification, so that the network device can learn whether the first terminal device can provide the relay service for the second terminal device. Therefore, if the first terminal device refuses to provide the relay service for the second terminal device, because the network device can also learn of the case, the first terminal device does not need to enter an RRC reestablishment procedure, but can continue to work normally within coverage of the network device, to improve service quality of the first terminal device, and reduce a resource consumed in the RRC reestablishment procedure. RRC reestablishment procedure in this application has the same meaning as RRC reestablishment process in the following description.

With reference to the first aspect, in a first optional implementation of the first aspect, the second message indicates that the first terminal device determines that the configuration fails, or indicates that the first terminal device refuses to provide the relay service for the second terminal device, and the method further includes: skipping initiating an RRC reestablishment process.

With reference to the first aspect or the first optional implementation of the first aspect, in a second optional implementation of the first aspect, when the first message is for querying whether the first terminal device can provide the relay service, the first message includes one or more of the following: an identifier of the second terminal device; integrity protection algorithm information or integrity protection rate information; encryption algorithm information or encryption rate information; a PQI or a 5QI; QoS; network slice information; or computing capability information.

The first message may include one or more of the foregoing information. In addition to the foregoing information, the first message may include other information. Based on one or more of the foregoing information, the first terminal device can clarify a capability that needs to be satisfied by the relay service, so that the first terminal device can more accurately determine whether the relay service can be provided.

With reference to the first aspect, the first optional implementation of the first aspect, or the second optional implementation of the first aspect, in a third optional implementation of the first aspect, the second message indicates that the configuration of the first terminal device fails, or indicates that the first terminal device refuses to provide the relay service, the second message further includes a cause value, and the cause value indicates a cause of refusing, by the first terminal device, to provide the relay service.

The second message may include the cause value, and the cause value may indicate the cause of refusing, by the first terminal device, to provide the relay service, so that the network device can clarify the cause of a case in which the first terminal device cannot provide the relay service. In this way, the network device can take a corresponding measure. For example, the network device may re-search for, for the second terminal device, a terminal device that can provide the relay service.

With reference to the third optional implementation of the first aspect, in a fourth optional implementation of the first aspect, the cause of refusing, by the first terminal device, to provide the relay service includes one or more of the following:
the first terminal device does not support a configuration that is of a Uu interface and that is included in the first message;
the first terminal device does not support a configuration that is of a PC5 interface and that is included in the first message;
admission control performed by the first terminal device on the second terminal device fails;
the first terminal device does not support an integrity protection algorithm included in the first message;
the first terminal device does not support the 5QI or the PQI included in the first message;
the first terminal device cannot identify a QoS flow ID indicated by the first message;
the first terminal device does not support a network slice indicated by the first message;
battery power of the first terminal device is insufficient;
a PDCP of the first terminal device is overloaded; or
the first terminal device does not support a computing capability indicated by the first message.

The foregoing provides some causes of, refusing, by the first terminal device, to provide the relay service. In addition to the foregoing causes, the first terminal device may refuse, due to another cause, to provide the relay service. The cause of, refusing, by the first terminal device, to provide the relay service is not limited.

With reference to any one of the first aspect, or the first optional implementation of the first aspect to the fourth optional implementation of the first aspect, in a fifth optional implementation of the first aspect, the first message is for querying whether the first terminal device can provide the relay service, the second message indicates that the first terminal device can provide the relay service, and the method further includes: receiving the configuration information from the network device; and performing configuration based on the configuration information, to provide the relay service.

If the first message is for querying whether the first terminal device can provide the relay service, the first message is quite likely to include no configuration information. In this case, if the second message indicates that the first terminal device can provide the relay service, the network device may send the configuration information to the first terminal device again, so that the first terminal device can perform configuration based on the configuration information, to provide the relay service.

With reference to any one of the first aspect, or the first optional implementation of the first aspect to the fifth optional implementation of the first aspect, in a sixth optional implementation of the first aspect, the first message is an RRC reconfiguration message, or a message specially for querying whether a terminal device can provide the relay service.

The first message may be implemented by using an existing message, for example, implemented by using the RRC reconfiguration message. In this way, no other message needs to be newly added, and compatibility with a conventional technology is facilitated. Alternatively, the first message may be implemented by using another message. For example, the first message is newly added in this embodiment of this application, and the first message may be for querying whether the terminal device can provide the relay service. In this way, an existing message does not need to be changed.

With reference to any one of the first aspect, or the first optional implementation of the first aspect to the sixth optional implementation of the first aspect, in a seventh optional implementation of the first aspect, the second message is an RRC reconfiguration complete message, or a message specially for indicating whether the terminal device provides the relay service.

For example, regardless of whether the second message indicates a success (for example, indicates that the first terminal device can provide the relay service, or indicates that the configuration is completed) or indicates a failure (for example, indicates that the first terminal device refuses to provide the relay service, or indicates that the configuration fails), messages of a same message may be used as the second message. For example, the RRC reconfiguration complete message may be used, or a newly added message may be used. The messages of the same type or the same message may indicate the success, or may indicate the failure, and there is no need to introduce excessive message types, to reduce the message types that the network device needs to identify. Alternatively, the second message may indicate a success and a failure by using different messages. In this case, for example, the second message may indicate the success by using the RRC reconfiguration complete message, and the second message may indicate the failure by using a newly added message. The different messages respectively indicate the success and the failure, so that the network device can determine the success or the failure based on a type of the second message, and efficiency of determining the success or the failure by the network device is higher.

With reference to any one of the first aspect, or the first optional implementation of the first aspect to the seventh optional implementation of the first aspect, in an eighth optional implementation of the first aspect, when the second message indicates that the configuration fails, the second message is a failure information message or an SUI message.

If the second message may indicate the success and the failure by using the different messages, for example, the second message may be the failure information message or the SUI message if the second message indicates the failure, or the second message may be an RRC reconfiguration message or another message if the second message indicates the success. An existing message separately indicates the success or the failure, so that efficiency of determining the success or the failure by the network device can be improved, no new message needs to be added, and compatibility with the conventional technology is facilitated.

According to a second aspect, a second communication method is provided. The method may be performed by a network device, or may be performed by a chip system, where the chip system can implement a function of the network device. For example, the network device is an access network device, for example, a base station. The method includes: sending a first message to a first terminal device, where the first message is for querying whether the first terminal device can provide a relay service; or the first message includes configuration information, and the configuration information is for configuring the first terminal device to provide a relay service for a second terminal device; and receiving a second message from the first terminal device, where when the first message is for querying whether the first terminal device can provide the relay service, the second message indicates whether the first terminal device can provide the relay service; or when the first message includes the configuration information, the second message indicates whether configuration of the first terminal device is completed, or the second message indicates whether the first terminal device can provide the relay service.

With reference to the second aspect, in a first optional implementation of the second aspect, the method further includes: determining that the first terminal device does not perform RRC reestablishment.

With reference to the second aspect or the first optional implementation of the second aspect, in a second optional implementation of the second aspect, when the first message is for querying whether the first terminal device can provide the relay service, the first message includes one or more of the following: an identifier of the second terminal device; a PC5 or Uu interface parameter; integrity protection algorithm information or integrity protection rate information; encryption algorithm information or encryption rate information; a PQI or a 5QI; QoS; network slice information; or computing capability information.

With reference to the second aspect, the first optional implementation of the second aspect, or the second optional implementation of the second aspect, in a third optional implementation of the second aspect, the second message indicates that the configuration of the first terminal device fails, or indicates that the first terminal device refuses to provide the relay service, the second message further includes a cause value, and the cause value indicates a cause of refusing, by the first terminal device, to provide the relay service.

With reference to the third optional implementation of the second aspect, in a fourth optional implementation of the second aspect, the cause of refusing, by the first terminal device, to provide the relay service includes one or more of the following:
the first terminal device does not support a configuration that is of a Uu interface and that is included in the first message;
the first terminal device does not support a configuration that is of a PC5 interface and that is included in the first message;
admission control performed by the first terminal device on the second terminal device fails;
the first terminal device does not support the integrity protection algorithm included in the first message;
the first terminal device does not support the 5QI or the PQI included in the first message;
the first terminal device cannot identify a QoS flow ID indicated by the first message;
the first terminal device does not support a network slice indicated by the first message;
battery power of the first terminal device is insufficient;
a PDCP of the first terminal device is overloaded; or
the first terminal device does not support a computing capability indicated by the first message.

With reference to any one of the second aspect, or the first optional implementation of the second aspect to the fourth optional implementation of the second aspect, in a fifth optional implementation of the second aspect, the first message is for querying whether the first terminal device can provide the relay service, the second message indicates that the first terminal device can provide the relay service, and the method further includes: sending the configuration information to the first terminal device.

With reference to any one of the second aspect, or the first optional implementation of the second aspect to the fifth optional implementation of the second aspect, in a sixth optional implementation of the second aspect, the first message is an RRC reconfiguration message.

With reference to any one of the second aspect, or the first optional implementation of the second aspect to the sixth optional implementation of the second aspect, in a seventh optional implementation of the second aspect, the second message is an RRC reconfiguration complete message, or a message specially for indicating whether a terminal device provides the relay service.

With reference to any one of the second aspect, or the first optional implementation of the second aspect to the seventh optional implementation of the second aspect, in an eighth optional implementation of the second aspect, when the second message indicates that the configuration fails, the second message is a failure information message or an SUI message.

With reference to any one of the second aspect, or the first optional implementation of the second aspect to the eighth optional implementation of the second aspect, in a ninth optional implementation of the second aspect, the second message indicates that the first terminal device refuses to provide the relay service, and the method further includes: sending a third message to the second terminal device, where the third message indicates that the first terminal device refuses to provide the relay service, or indicates to reselect a terminal device that can provide the relay service.

If the first terminal device refuses to provide the relay service, the network device may notify the second terminal device, so that the second terminal device may take a corresponding measure. For example, the second terminal device may restart measurement, to search for the terminal device that can provide the relay service.

With reference to the ninth optional implementation of the second aspect, in a tenth optional implementation of the second aspect, the third message further includes information about one or more terminal devices, and the one or more terminal devices cannot provide the relay service.

The one or more terminal devices cannot provide the relay service. Therefore, when performing measurement, the second terminal device may not need to measure the one or more terminal devices, to satisfy an energy saving requirement of the second terminal device.

With reference to any one of the second aspect, or the first optional implementation of the second aspect to the tenth optional implementation of the second aspect, in an eleventh optional implementation of the second aspect, the method further includes: receiving a fourth message from the second terminal device, where the fourth message indicates an energy saving requirement; and sending first information to the second terminal device, where the first information includes information about M terminal devices, the M terminal devices do not need to be measured, or refuse to provide the relay service, and M is a positive integer.

If the second terminal device has the energy saving requirement, the second terminal device may notify the network device. After learning that the second terminal device has the energy saving requirement, the network device may send the first information to the second terminal device. The M terminal devices indicated by the first information may not need to be measured, or refuse to provide the relay service. Therefore, after receiving the first information, when performing measurement, the second terminal device may not need to measure the M terminal devices, to reduce power consumption caused by the measurement, and satisfy the energy saving requirement.

With reference to the eleventh optional implementation of the second aspect, in a twelfth optional implementation of the second aspect, the fourth message further includes second information, the second information includes information about N terminal devices, the N terminal devices refuse to provide the relay service, and N is a positive integer.

For example, if the second terminal device determines, based on historical information, that the N terminal devices refused to provide the relay service for the second terminal device, the second terminal device may add the information about the N terminal devices to a blacklist, and send the blacklist to the network device. Therefore, when configuring the second terminal device to perform measurement, the network device may consider not configuring the second terminal device to measure the N terminal devices, to reduce an invalid-measurement process of the second terminal device.

For technical effects brought by the second aspect or the optional implementations of the second aspect, refer to the descriptions of the technical effects of the first aspect or the corresponding implementations.

According to a third aspect, a third communication method is provided. The method may be performed by a second terminal device, or may be performed by a chip system, where the chip system can implement a function of the second terminal device. The second terminal device is, for example, a terminal device that needs to perform relay by using another terminal device in a relay scenario. The method includes: sending a measurement result to a network device, where the measurement result includes a measurement report for at least one terminal device; and performing a first operation when a first condition is satisfied; otherwise, skipping performing the first operation, where the first operation includes one or more of the following: sending a discovery message, measuring another terminal device, or sending a new measurement result to the network device.

The first operation may be considered as an operation related to a measurement process. In other words, in this embodiment of this application, if the first condition is not satisfied, the second terminal device may not perform the first operation. Because the second terminal device has sent the measurement result to the network device, and the network device can determine, based on the measurement result, whether the second terminal device can perform a path switch, determining of the network device is not affected greatly even if the second terminal device does not perform measurement anymore, and does not send the new measurement result to the network device anymore. In addition, in this manner, a measurement process of the second terminal device can be reduced, a resource consumed in the measurement process can be reduced, and battery power of the second terminal device can also be saved.

With reference to the third aspect, in a first optional implementation of the third aspect, after the sending a measurement result to a network device, the method further includes: starting a timer, where the first condition is that the timer expires.

In this manner, that the first condition is satisfied means that the timer expires, and that the first condition is not satisfied means that the timer does not expire. Determining whether to perform the first operation by using the timer is a simple manner, and this helps to promote the technical solution in this embodiment of this application to more terminal devices for use.

With reference to the third aspect, in a second optional implementation of the third aspect, the first condition is that a third message from the network device is received, where the third message indicates that a first terminal device refuses to provide a relay service, or indicates to reselect a terminal device that can provide the relay service.

In this manner, that the first condition is satisfied means that the third message from the network device is received, and that the first condition is not satisfied means that the third message from the network device is not received. Determining, by using the message from the network device, whether to perform the first operation can enable a determining result to be more accurate and more consistent with a current case.

With reference to the second optional implementation of the third aspect, in a third optional implementation of the third aspect, the third message further includes information about one or more terminal devices, and the one or more terminal devices cannot provide the relay service.

With reference to any one of the third aspect, or the first optional implementation of the third aspect to the third optional implementation of the third aspect, in a fourth optional implementation of the third aspect, the method further includes: sending a fourth message to the network device, where the fourth message indicates an energy saving requirement; and receiving first information from the network device, where the first information includes information about M terminal devices, the M terminal devices do not need to be measured, or refuse to provide the relay service, and M is a positive integer.

With reference to the fourth optional implementation of the third aspect, in a fifth optional implementation of the third aspect, the fourth message further includes second information, the second information includes information about N terminal devices, the N terminal devices refuse to provide the relay service, and N is a positive integer.

With reference to any one of the third aspect, or the first optional implementation of the third aspect to the fifth optional implementation of the third aspect, in a sixth optional implementation of the third aspect, the method further includes: receiving measurement configuration information from the network device, and performing measurement based on the measurement configuration information, to obtain the measurement result; and the sending a measurement result to a network device includes: when a reporting condition of the measurement report is satisfied, sending the measurement result to the network device.

The network device sends the measurement configuration information to the second terminal device, to configure the second terminal device to perform measurement. The second terminal device may obtain the measurement result after performing measurement. The measurement result includes, for example, the measurement report obtained by measuring the one or more terminal devices. If the reporting condition of the measurement report is satisfied, the second terminal device may send the measurement result to the network device, so that the network device can obtain the measurement result of the second terminal device, and select, for the second terminal device, the terminal device that can provide the relay service.

With reference to any one of the third aspect, or the first optional implementation of the third aspect to the sixth optional implementation of the third aspect, in a seventh optional implementation of the third aspect, when the first operation includes the sending a discovery message, the method further includes: sending the discovery message; and when the first condition is not satisfied, stopping sending the discovery message.

If the first operation includes the sending a discovery message, if the second terminal device originally does not send the discovery message, when the first condition is not satisfied, the second terminal device continues not to send the discovery message; or if the second terminal device is originally sending the discovery message, when it is determined that the first condition is not satisfied, the second terminal device may stop sending the discovery message, to reduce power consumption.

With reference to any one of the third aspect, or the first optional implementation of the third aspect to the sixth optional implementation of the third aspect, in an eighth optional implementation of the third aspect, when the first operation includes the sending a new measurement result to the network device, the method further includes: receiving a discovery message from the second terminal device; measuring the discovery message of the second terminal device to obtain the new measurement result; and when the first condition is not satisfied and the reporting condition of the measurement report is satisfied, skipping sending the new measurement result to the network device.

If the second terminal device receives a discovery message from the first terminal device, the second terminal device may measure the discovery message to obtain the new measurement result. If the first operation includes sending a new measurement report to the network device (in other words, the first operation includes sending the measurement report to the network device), when the first condition is not satisfied, even if the reporting condition of the measurement report is satisfied, the second terminal device does not send the new measurement report to the network device, to reduce power consumption.

For technical effects brought by some optional implementations of the third aspect, refer to the descriptions of the technical effects of the corresponding implementations of the second aspect.

According to a fourth aspect, a fourth communication method is provided. The method may be performed by a second terminal device, or may be performed by a chip system, where the chip system can implement a function of the second terminal device. The second terminal device is, for example, a terminal device that needs to perform relay by using another terminal device in a relay scenario. The method includes: receiving configuration information from a first network device, where the configuration information is for configuring the second terminal device to switch to communicate with a third network device via a first terminal device, or is for configuring the second terminal device to be handed over to a second network device; performing a path switch based on the configuration information; and when a first condition is satisfied, determining that the path switch succeeds; otherwise, determining that the path switch fails.

In this embodiment of this application, the second terminal device may determine, based on the first condition, whether the path switch succeeds or fails. That is, this embodiment of this application provides a manner in which the second terminal device determines whether the path switch succeeds. If the path switch fails, the second terminal device may perform a corresponding operation, for example, continue to perform communication within coverage of a source network device, or may enter a new cell through cell reselection, to resume a service of the second terminal device as soon as possible, and improve service continuity.

With reference to the fourth aspect, in a first optional implementation of the fourth aspect, after the receiving configuration information from a first network device, the method further includes: starting a timer, where the first condition is that the timer does not expire.

In this manner, that the first condition is satisfied means that the timer does not expire, and that the first condition is not satisfied means that the timer expires. The second terminal device may determine, based on the timer, whether the path switch succeeds or fails. A determining manner is simple and easy to implement. Even for a terminal device with a low capability, the technical solution in this embodiment of this application can also be applied.

With reference to the fourth aspect, in a second optional implementation of the fourth aspect, the configuration information is for configuring the second terminal device to switch to communicate with the third network device via the first terminal device, and the first condition includes:
when a quantity of times of sending a connection establishment request message to the first terminal device is less than or equal to M, a feedback from the first terminal device is received, where M is a maximum quantity of times of retransmission;
security verification on the first terminal device succeeds; or
a connection establishment request message is sent to the first terminal device, and a connection establishment response message from the first terminal device is received, where the connection establishment response message indicates that connection establishment is accepted.

If the second terminal device determines, based on a timer, whether the path switch succeeds, timing duration of the timer is usually not set to be excessively short. Otherwise, a determining result of the second terminal device may be inaccurate. However, if the second terminal device does not use a timer, but determines, by using one of the foregoing conditions, whether the path switch succeeds, shorter time is needed for determining, and efficiency is higher, so that the second terminal device can clarify, as soon as possible, whether the path switch succeeds, to take a corresponding measure as soon as possible, and reduce service interruption time.

With reference to the fourth aspect, the first optional implementation of the fourth aspect, or the second optional implementation of the fourth aspect, in a third optional implementation of the fourth aspect, it is determined that the path switch fails, and the method further includes: sending failure information to the first network device through a first path, where the failure information indicates that the path switch fails, and the first path is a communication path between the second terminal device and the first network device before the path switch; and continuing to communicate with the first network device through the first path.

The first path is the communication path between the second terminal device and the first network device before the path switch. For example, the first path is the second terminal device-the first network device, or the second terminal device-the first terminal device-the first network device. If the second terminal device has not broken, before successfully performing the path switch, a connection to the first network device through the first path, the second terminal device may perform the method. After the first network device receives the failure information, the second terminal device may continue to communicate with the first network device through the first path. That is, because the original communication path has not been broken, the second terminal device may continue to perform communication through the original communication path, and does not need to reselect a communication path. In other words, the second terminal device does not initiate an RRC connection reestablishment process, to improve service continuity of the second terminal device.

With reference to the fourth aspect, the first optional implementation of the fourth aspect, or the second optional implementation of the fourth aspect, in a fourth optional implementation of the fourth aspect, it is determined that the path switch fails, and the method further includes: sending an RRC connection reestablishment request message to the first network device through a first path, where the RRC connection reestablishment request message requests to reestablish an RRC connection to the first network device, and the first path is a communication path between the second terminal device and the first network device before the path switch.

If the second terminal device has not broken, before successfully performing the path switch, a connection to the first network device through the first path, the second terminal device may also perform the method, to reestablish the RRC connection within coverage of the first network device, thereby communicating with the first network device through the new connection.

With reference to the third optional implementation of the fourth aspect or the fourth optional implementation of the fourth aspect, in a fifth optional implementation of the fourth aspect, the first path is a path for connecting to the first network device via a third terminal device, or the first path is a path for directly connecting to the first network device.

With reference to the fourth aspect, the first optional implementation of the fourth aspect, or the second optional implementation of the fourth aspect, in a sixth optional implementation of the fourth aspect, it is determined that the path switch fails, and the method further includes: performing cell reselection, to reselect a first cell; and initiating an RRC connection reestablishment process in the first cell, or initiating an RRC connection establishment process in the first cell.

For example, if the second terminal device breaks a first path between the second terminal device and the first network device, the second terminal device may perform the method. Alternatively, even if the second terminal device does not break a first path between the second terminal device and the first network device, the second terminal device may also perform the method.

According to a fifth aspect, a fifth communication method is provided. The method may be performed by a first network device, or may be performed by a chip system, where the chip system can implement a function of the first network device. The method includes: receiving failure information or an RRC connection reestablishment request message from a second terminal device through a first path, where the failure information indicates that a path switch fails, the RRC connection reestablishment request message requests to reestablish an RRC connection to the first network device, and the first path is a communication path between the second terminal device and the first network device before the path switch.

With reference to the fifth aspect, in a first optional implementation of the fifth aspect, the failure information is received, and the method further includes: determining that the second terminal device does not initiate RRC connection reestablishment.

For technical effects brought by the fifth aspect or the first optional implementation of the fifth aspect, refer to the descriptions of the technical effects of the fourth aspect or the corresponding implementations.

According to a sixth aspect, a sixth communication method is provided. The method may be performed by a second terminal device, or may be performed by a chip system, where the chip system can implement a function of the second terminal device. The second terminal device is, for example, a terminal device that needs to perform relay by using another terminal device in a relay scenario. The method includes: receiving configuration information from a first network device, where the configuration information is for configuring the second terminal device to switch to communicate with a third network device via a first terminal device, or is for configuring the second terminal device to be handed over to a second network device; performing a path switch based on the configuration information; and when a second condition is satisfied, determining that the path switch fails.

In this embodiment of this application, the second terminal device may determine, based on the second condition, whether the path switch fails. That is, this embodiment of this application provides a manner in which the second terminal device determines whether the path switch fails. If the path switch fails, the second terminal device may perform a corresponding operation, for example, continue to initiate reestablishment within coverage of a source network device, may enter a new cell through cell reselection, to perform reestablishment, may initiate reestablishment by using the first terminal device, or may select a new relay terminal device through relay terminal device reselection or selection and initiate reestablishment by using the relay terminal device, to resume a service of the second terminal device as soon as possible, and improve service continuity.

With reference to the sixth aspect, in a first optional implementation of the sixth aspect, after the receiving configuration information from a first network device, the method further includes: starting a timer, where the second condition is that the timer expires.

In this manner, that the second condition is satisfied means that the timer expires. The second terminal device may determine, based on the timer, whether the path switch succeeds or fails. A determining manner is simple and easy to implement. Even for a terminal device with a low capability, the technical solution in this embodiment of this application can also be applied.

With reference to the first implementation of the sixth aspect, in a second optional implementation of the sixth aspect, the timer is stopped when one or more of the following conditions are satisfied:
establishment of a PC5 connection between the second terminal device and the first terminal device is completed;
the second terminal device succeeds in random access to the third network device;
the second terminal device sends an RRC reconfiguration complete message to a lower layer of the second terminal device, and receives an acknowledgement feedback from the lower layer;
the second terminal device receives second indication information from the third network device, where the second indication information indicates the second terminal device to stop the timer;
the second terminal device receives third indication information from the first terminal device, where the third indication information indicates the second terminal device to stop the timer, or the third indication information indicates that the first terminal device succeeds in random accesses to the third network device;
the second terminal device receives fourth indication information from the first terminal device, where the fourth indication information indicates that a Uu radio link failure (radio link failure, RLF) occurs on the first terminal device or that the first terminal device fails in random access to the third network device; or
establishment of a PC5 connection between the second terminal device and the first terminal device fails, or a PC5 RLF is determined.

If the second terminal device determines, depending on whether the timer expires, whether the path switch fails, timing duration of the timer is usually not set to be excessively short, and the timer needs to be stopped in time, to avoid that the path switch is determined as a failure because the timer is not stopped.

With reference to the sixth aspect, the first optional implementation of the sixth aspect, or the second optional implementation of the sixth aspect, in a third optional implementation of the sixth aspect,
the second condition is that the timer expires;
the second condition is that the second terminal device receives the fourth indication information from the first terminal device, where the fourth indication information indicates that the Uu RLF occurs on the first terminal device or that the first terminal device fails in the random access to the third network device; or
the second condition is that the establishment of the PC5 connection between the second terminal device and the first terminal device fails, or that the PC5 RLF is determined.

If the second terminal device determines, only depending on whether the timer expires, whether the path switch fails, the timing duration of the timer is usually not set to be excessively short. When the failure occurs, the second terminal device still needs to wait. In this implementation, when the failure occurs, the failure can be quickly determined, and a resumption process can be entered as soon as possible, to improve service continuity of the second terminal device.

With reference to the sixth aspect, the first optional implementation of the sixth aspect, the second optional implementation of the sixth aspect, or the third optional implementation of the sixth aspect, in a fourth optional implementation of the sixth aspect, the method further includes: The second terminal device sends an RRC connection reestablishment request message to the first network device through a first path, where the RRC connection reestablishment request message requests to reestablish an RRC connection to the first network device, and the first path is a communication path between the second terminal device and the first network device before the path switch.

If the second terminal device has not broken, before successfully performing the path switch, a connection to the first network device through the first path, the second terminal device may also perform the method, to reestablish the RRC connection within coverage of the first network device, thereby communicating with the first network device through the new connection.

With reference to the fourth optional implementation of the sixth aspect, in a fifth optional implementation of the sixth aspect, the first path is a path for connecting to the first network device via a third terminal device, or the first path is a path for directly connecting to the first network device.

With reference to the sixth aspect, the first optional implementation of the sixth aspect, the second optional implementation of the sixth aspect, or the third optional implementation of the sixth aspect, in a sixth optional implementation of the sixth aspect, the method further includes: performing cell reselection, to reselect a first cell; and initiating an RRC connection reestablishment process in the first cell, or initiating an RRC connection establishment process in the first cell.

For example, if the second terminal device breaks a first path between the second terminal device and the first network device, the second terminal device may perform the method. Alternatively, even if the second terminal device does not break a first path between the second terminal device and the first network device, the second terminal device may also perform the method.

According to a seventh aspect, a communication apparatus is provided. The communication apparatus may include modules configured to perform the method according to any one of the first aspect or the optional implementations of the first aspect, for example, include a processing unit and a transceiver unit. Optionally, a storage unit may further be included.

For example, the processing unit is configured to receive a first message from a network device via the transceiver unit, where the first message includes configuration information, or the first message is for querying whether the communication apparatus can provide a relay service, and the configuration information is for configuring the communication apparatus to provide the relay service for a second terminal device.

The processing unit is further configured to send a second message to the network device via the transceiver unit, where the second message indicates that configuration of the communication apparatus is completed or fails, and the first message includes the configuration information; or the second message indicates that the communication apparatus can provide the relay service or refuses to provide the relay service.

According to an eighth aspect, a communication apparatus is provided. The communication apparatus may include modules configured to perform the method according to any one of the second aspect or the optional implementations of the second aspect, for example, include a transceiver unit and a processing unit. Optionally, a storage unit may further be included.

For example, the processing unit is configured to send a first message to a first terminal device via the transceiver unit, where the first message includes configuration information, or the first message is for querying whether the first terminal device can provide a relay service, and the configuration information is for configuring the first terminal device to provide the relay service for the communication apparatus.

The processing unit is further configured to receive a second message from the first terminal device via the transceiver unit, where the second message indicates that configuration of the first terminal device is completed or fails, and the first message includes the configuration information; or the second message indicates that the first terminal device can provide the relay service or refuses to provide the relay service.

According to a ninth aspect, a communication apparatus is provided. The communication apparatus may include modules configured to perform the method according to any one of the third aspect or the optional implementations of the third aspect, for example, include a transceiver unit and a processing unit. Optionally, a storage unit may further be included.

For example, the processing unit is configured to send a measurement result to a network device via the transceiver unit, where the measurement result includes a measurement report for at least one terminal device.

The processing unit is further configured to: perform a first operation when a first condition is satisfied; otherwise, skip performing the first operation, where the first operation includes one or more of the following: sending a discovery message, measuring another terminal device, or sending a new measurement result to the network device.

According to a tenth aspect, a communication apparatus is provided. The communication apparatus may include modules configured to perform the method according to any one of the fourth aspect or the optional implementations of the fourth aspect, for example, include a transceiver unit and a processing unit. Optionally, a storage unit may further be included.

For example, the processing unit is configured to receive configuration information from a first network device via the transceiver unit, where the configuration information is for configuring the communication apparatus to switch to communicate with a third network device via a first terminal device, or is for configuring the communication apparatus to be handed over to a second network device.

The processing unit is further configured to perform a path switch based on the configuration information.

The processing unit is further configured to: when a first condition is satisfied, determine that the path switch succeeds; otherwise, determine that the path switch fails.

According to an eleventh aspect, a communication apparatus is provided. The communication apparatus may include modules configured to perform the method according to any one of the fifth aspect or the optional implementations of the fifth aspect, for example, include a transceiver unit and a processing unit. Optionally, a storage unit may further be included.

For example, the processing unit is configured to receive failure information or an RRC connection reestablishment request message from a second terminal device via the transceiver unit, where the failure information indicates that a path switch fails, the RRC connection reestablishment request message requests to reestablish an RRC connection to the first network device, and the first path is a communication path between the second terminal device and the first network device before the path switch.

According to a twelfth aspect, a communication apparatus is provided. The communication apparatus may include modules configured to perform the method according to any one of the sixth aspect or the optional implementations of the sixth aspect, for example, include a transceiver unit and a processing unit. Optionally, a storage unit may further be included.

For example, the processing unit is configured to receive configuration information from a first network device via the transceiver unit, where the configuration information is for configuring a second terminal device to switch to communicate with a third network device via a first terminal device, or is for configuring a second terminal device to be handed over to a second network device.

The processing unit is further configured to perform a path switch based on the configuration information.

The processing unit is further configured to: when a first condition is satisfied, determine that the path switch succeeds; otherwise, determine that the path switch fails.

According to a thirteenth aspect, a chip system is provided. The chip system includes one or more processors, and includes a communication interface. The processor is coupled to the communication interface, and is configured to implement the method according to any one of the first aspect or the optional implementations of the first aspect. Optionally, the chip system may further include a memory. For example, the processor may read and execute a software program stored in the memory, to implement the method according to any one of the first aspect or the optional implementations of the first aspect.

According to a fourteenth aspect, a chip system is provided. The chip system includes one or more processors, and includes a communication interface. The processor is coupled to the communication interface, and is configured to implement the method according to any one of the second aspect or the optional implementations of the second aspect. Optionally, the chip system may further include a memory. For example, the processor may read and execute a software program stored in the memory, to implement the method according to any one of the second aspect or the optional implementations of the second aspect.

According to a fifteenth aspect, a chip system is provided. The chip system includes one or more processors, and includes a communication interface. The processor is coupled to the communication interface, and is configured to implement the method according to any one of the third aspect or the optional implementations of the third aspect. Optionally, the chip system may further include a memory. For example, the processor may read and execute a software program stored in the memory, to implement the method according to any one of the third aspect or the optional implementations of the third aspect.

According to a sixteenth aspect, a chip system is provided. The chip system includes one or more processors, and includes a communication interface. The processor is coupled to the communication interface, and is configured to implement the method according to any one of the fourth aspect or the optional implementations of the fourth aspect. Optionally, the chip system may further include a memory. For example, the processor may read and execute a software program stored in the memory, to implement the method according to any one of the fourth aspect or the optional implementations of the fourth aspect.

According to a seventeenth aspect, a chip system is provided. The chip system includes one or more processors, and includes a communication interface. The processor is coupled to the communication interface, and is configured to implement the method according to any one of the fifth aspect or the optional implementations of the fifth aspect. Optionally, the chip system may further include a memory. For example, the processor may read and execute a software program stored in the memory, to implement the method according to any one of the fifth aspect or the optional implementations of the fifth aspect.

According to an eighteenth aspect, a chip system is provided. The chip system includes one or more processors, and includes a communication interface. The processor is coupled to the communication interface, and is configured to implement the method according to any one of the sixth aspect or the optional implementations of the sixth aspect. Optionally, the chip system may further include a memory. For example, the processor may read and execute a software program stored in the memory, to implement the method according to any one of the sixth aspect or the optional implementations of the sixth aspect.

According to a nineteenth aspect, a first communication system is provided. The first communication system includes the communication apparatus according to the seventh aspect or the chip system according to the thirteenth aspect, and includes the communication apparatus according to the eighth aspect or the chip system according to the fourteenth aspect.

According to a twentieth aspect, a second communication system is provided. The second communication system includes the communication apparatus according to the eighth aspect or the chip system according to the fourteenth aspect, and includes the communication apparatus according to the ninth aspect or the chip system according to the fifteenth aspect.

According to a twenty-first aspect, a third communication system is provided. The third communication system includes the communication apparatus according to the tenth aspect or the chip system according to the sixteenth aspect, and includes the communication apparatus according to the eleventh aspect or the chip system according to the seventeenth aspect.

According to a twenty-second aspect, a fourth communication system is provided. The fourth communication system includes the communication apparatus according to the twelfth aspect or the chip system according to the eighteenth aspect, and includes the communication apparatus according to the eleventh aspect or the chip system according to the seventeenth aspect.

According to a twenty-third aspect, a computer-readable storage medium is provided. The computer-readable storage medium is configured to store a computer program. When the computer program is run on a computer, the computer is enabled to perform the method according to any one of the foregoing aspects.

According to a twenty-fourth aspect, a computer program product including instructions is provided. The computer program product is configured to store a computer program. When the computer program is run on a computer, the computer is enabled to perform the method according to any one of the foregoing aspects.

In embodiments of this application, if the first terminal device refuses to provide the relay service for the second terminal device, because the network device can also learn of the case, the first terminal device does not need to enter the RRC reestablishment procedure, but can continue to work normally within the coverage of the network device, to improve the service quality of the first terminal device, and reduce the resource consumed in the RRC reestablishment procedure.

### BRIEF DESCRIPTION OF DRAWINGS

FIG. 1A to FIG. 1D are diagrams of several scenarios in which a remote terminal device performs a path switch;
FIG. 2 is a flowchart of switching from a direct link to an indirect link by a remote terminal device;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7 is a flowchart of a fifth communication method according to an embodiment of this application;
FIG. 8 is a flowchart of a sixth communication method according to an embodiment of this application;
FIG. 9 is a flowchart of a seventh communication method according to an embodiment of this application;
FIG. 10 is a flowchart of an eighth communication method according to an embodiment of this application;
FIG. 11 is a schematic block diagram of a terminal device according to an embodiment of this application; and
FIG. 12 is a schematic block diagram of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

Some terms in embodiments of this application are explained and described below, to facilitate understanding of a person skilled in the art.

In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, smart office, smart wearables, smart transportation, a smart city (smart city), an unmanned aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is the UE is used for description. Remote UE is UE that needs other UE to provide a relay service, to access a network. Relay UE is UE that provides the relay service for other UE.

A network device in embodiments of this application includes, for example, an access network device and/or a core network device. The access network device is a device with a wireless transceiver function, and is configured to communicate with the terminal device. The access network device includes but is not limited to: a base station (BTS, NodeB, eNodeB/eNB, or gNodeB/gNB) in the foregoing communication system, a transmission reception point (transmission reception point, TRP), a base station subsequently evolved in the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle to everything (vehicle to everything, V2X) technology may be a road side unit (road side unit, RSU). The following describes the access network device by using an example in which the access network device is the base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement a function of a core network in systems using different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

In embodiments of this application, unless otherwise specified, a quantity of nouns represents "a singular noun or a plural noun", namely, "one or more". "At least one" means one or more, and "a plurality of" means two or more. The term "and/or" describes an association relationship between associated objects, and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B. "At least one of the following" or a similar expression thereof means any combination of these items, and includes a singular item or any combination of plural items. For example, at least one of a, b, or c represents: a, b, c, a and b, a and c, b and c, or a, b, and c. a, b, and c may be singular or plural.

Ordinal numbers such as "first" and "second" in embodiments of this application are for distinguishing between a plurality of objects, and are not intended to limit sizes, content, an order, a time sequence, priorities, or importance degrees of the plurality of objects. For example, a first message and a second message may be a same message, or may be different messages. In addition, such names do not indicate that the two messages are different in a sending sequence, an information amount, content, priorities, importance degrees, or the like.

In a currently proposed UE relay technology, there is a relay manner in which remote UE is visible to a RAN. In the relay manner, the remote UE can implement a path switch.

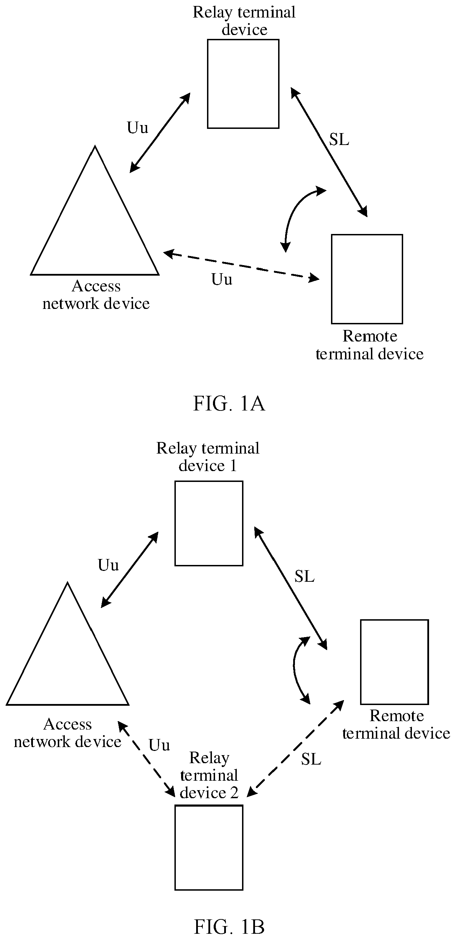

A path switch process of the remote UE includes a process of switching from a direct link to an indirect link, a process of switching from the indirect link to the direct link, and a process of switching between indirect links. Refer to FIG. 1A to FIG. 1D. FIG. 1A shows a scenario in which remote UE switches from an indirect link to a direct link or a scenario in which remote UE switches from a direct link to an indirect link. For example, the remote UE is a smart watch. An embedded subscriber identity module (embedded subscriber identity module, eSIM) card may be installed on the smart watch, and the smart watch can directly communicate with an access network device by using the eSIM card. A user carries the smart watch to run without carrying a mobile phone. In this case, the smart watch may directly communicate with the access network device through a Uu interface outdoors. When the user goes back home after running, the smart watch detects existence of the mobile phone through a sidelink (sidelink, SL). In this case, the smart watch may automatically switch from a direct link between the smart watch and the access network device to an indirect link for relay performed by using the mobile phone, or the smart watch may switch, based on an operation of the user, from a direct link between the smart watch and the access network device to an indirect link for relay performed by using the mobile phone, to use the mobile phone as relay UE, thereby communicating with a network via the mobile phone, so that power consumption of the smart watch is reduced.

FIG. 1B shows a scenario in which remote UE switches between indirect links. For example, the remote UE is a smart watch. A user carries the smart watch and a mobile phone. At first, the mobile phone is relay UE of the smart watch, and provides a relay service for the smart watch. After the user enters a vehicle, the smart watch may switch from an indirect link for relay performed by using the mobile phone to an indirect link for relay performed by using the vehicle, to use the vehicle as new relay UE, thereby communicating with a network via the vehicle, so that power consumption of the smart watch and power consumption of the mobile phone are reduced.

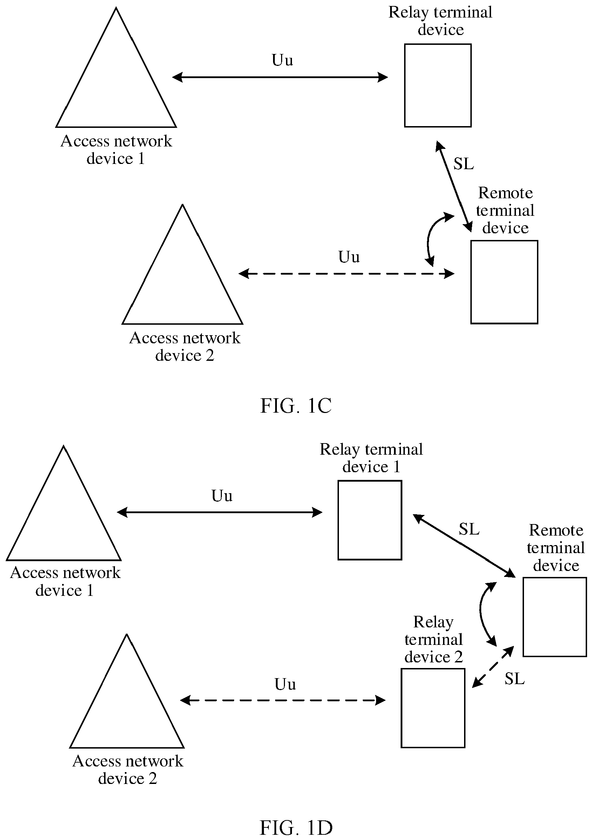

FIG. 1C shows a scenario in which remote UE switches from an indirect link to a direct link or a scenario in which remote UE switches from a direct link to an indirect link. For example, the remote UE is a smart watch. A user does activities outdoors. Because an eSIM card is installed on the smart watch, the smart watch may directly communicate with an access network device 2 by using the eSIM card. Then, the user enters a vehicle, and the vehicle travels to another city. In a traveling process of the vehicle, the smart watch automatically (or based on an operation of the user) switches from a direct link for direct communication with the access network device A to an indirect link for relay performed by using the vehicle, to reduce power consumption of the smart watch. Because the vehicle is in a traveling state, an access network device B connected to the vehicle and the access network device A may be different access network devices.

FIG. 1D shows a scenario in which remote UE switches between indirect links. For example, the remote UE is a smart watch. A user takes a vehicle A to a place. After the user enters the vehicle 1, the smart watch may establish a connection to the vehicle 1, to use the vehicle 1 as relay UE of the smart watch, thereby communicating with a network via the vehicle 1. The user changes the vehicle and enters a vehicle 2 halfway. In a traveling process of the vehicle 2, quality of communication between the smart watch and the vehicle 1 gradually deteriorates. In this case, the smart watch may automatically (or based on an operation of the user) switch from an indirect link for relay performed by using the vehicle 1 to an indirect link for relay performed by using the vehicle 2, to improve communication quality of the smart watch. In addition, because the vehicle 2 is in a traveling state, and the vehicle 1 may also be in a traveling state, an access network device serving the vehicle 1 and an access network device serving the vehicle 2 may be different access network devices.

The scenarios shown in FIG. 1A and FIG. 1B are intra-base station (intra-gNB) switch scenarios, and the scenarios shown in FIG. 1C and FIG. 1D are inter-base station (inter-gNB) switch scenarios.

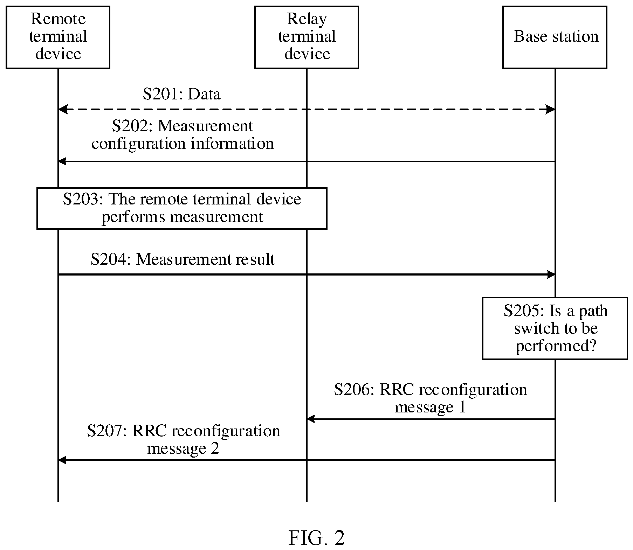

In a case of switching to the indirect link (including switching from the direct link to the indirect link or switching between the indirect links), a mainstream solution currently discussed is as follows: A base station configures the remote UE to perform measurement, the remote UE performs measurement based on a discovery (discovery) message from other UE, the remote UE sends a measurement result to the base station, and the base station determines whether the remote UE is to perform the path switch. If the base station determines that the remote UE is to perform the path switch, the base station separately sends configuration information to the remote UE and relay UE, to configure the path switch. For example, for the process in which the remote UE switches from the direct link to the indirect link, refer to a procedure shown in FIG. 2.

S201: Remote UE performs data transmission with a base station.

S202: The base station sends an RRC message to the remote UE, and the remote UE receives the RRC message from the base station. The RRC message includes, for example, measurement configuration (measurement configuration) information, and the measurement configuration information is used by the remote UE to measure other UE or select other UE.

S203: The remote UE measures or selects the other UE. For example, the remote UE may trigger the other UE to send a discovery message, so that the remote UE may measure the discovery message from the other UE, to complete measurement or selection of the other UE.

S204: The remote UE sends a measurement result to the base station, and the base station receives the measurement result from the remote UE; or the remote UE sends a selection result to the base station, and the base station receives the selection result from the remote UE. In FIG. 2, sending the measurement result is used as an example.

The measurement result is, for example, a measurement report (measurement report), or the measurement result includes an ID of relay UE. The selection result is, for example, a result of selecting relay UE by the remote UE, or includes ID information of the relay UE. Optionally, measurement information of the remote UE may further be included.

S205: The base station determines, based on the measurement result or the selection result, whether the remote UE is to perform a path switch. If the base station determines that the remote UE is to perform the path switch, S206 and S207 are performed; otherwise, S206 and S207 are not performed.

S206: The base station sends an RRC reconfiguration (reconfiguration) message to the relay UE, and the relay UE receives the RRC reconfiguration message from the base station. To distinguish from another RRC reconfiguration message, the RRC reconfiguration message in S206 is referred to as an RRC reconfiguration message 1.

The RRC reconfiguration message 1 may include information configured by the base station for the relay UE, for example, include configuration information of a Uu interface and configuration information of a sidelink (sidelink, SL). The sidelink is a link between the remote UE and the relay UE. The relay UE provides a relay service for the remote UE through the sidelink. After receiving the RRC reconfiguration message 1, the relay UE may perform configuration, for example, may configure a Uu link and the sidelink, based on the information included in the RRC reconfiguration message 1.

S207: The base station sends an RRC reconfiguration message to the remote UE, and the remote UE receives the RRC reconfiguration message from the base station. To distinguish from another RRC reconfiguration message, the RRC reconfiguration message in S207 is referred to as an RRC reconfiguration message 2.

The RRC reconfiguration message 2 may include information configured by the base station for the remote UE, for example, include the configuration information of the Uu interface and the configuration information of the sidelink. After receiving the RRC reconfiguration message 2, the remote UE may perform configuration, for example, may configure the Uu link and the sidelink, based on the information included in the RRC reconfiguration message 2.

According to a normal procedure, after configuration of the remote UE and the relay UE is completed, the relay UE can provide the relay service for the remote UE, so that the remote UE can communicate with the base station via the relay UE. However, it is quite likely that the configuration of the relay UE fails or that the relay UE refuses to provide the relay service for the remote UE. In this case, the relay UE cannot notify the base station. Therefore, the relay UE needs to perform processing based on a configuration failure case. Specifically, the relay UE enters an RRC reestablishment procedure, and can continue to work only after RRC reestablishment succeeds. It is clear that this causes deterioration of service quality of the relay UE.

In view of this, the technical solutions in embodiments of this application are provided. In embodiments of this application, regardless of whether a first terminal device can provide a relay service, the first terminal device can send a second message to a network device for notification, so that the network device can learn whether the first terminal device can provide the relay service. Therefore, if the first terminal device refuses to provide the relay service, because the network device can also learn of the case, the first terminal device does not need to interrupt current communication of the first terminal device, but can continue to work normally within coverage of the network device, to improve service quality of the first terminal device, and reduce a resource consumed in an RRC reestablishment procedure.

The technical solutions provided in embodiments of this application may be applied to a 4th generation (4th generation, 4G) system, for example, a long term evolution (long term evolution, LTE) system; may be applied to a 5G system, for example, a new radio (new radio, NR) system; or may be applied to a next-generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario, for example, may be applied to an internet of vehicles, for example, V2X or vehicle-to-vehicle (vehicle-to-vehicle, V2V), or may be applied to a field such as intelligent driving, assisted driving, or an intelligent connected vehicle.

For an application scenario of embodiments of this application, refer to FIG. 1A, FIG. 1B, FIG. 1C, or FIG. 1D. The access network device in FIG. 1A to FIG. 1D is, for example, a base station. The access network device corresponds to different devices in different systems. For example, the access network device may correspond to an eNB in the 4G system, and corresponds to an access network device, for example, a gNB, in 5G in the 5G system. Certainly, the technical solutions provided in embodiments of this application may alternatively be applied to a future mobile communication system. Therefore, the access network device in FIG. 1A to FIG. 1D may alternatively correspond to a network device in the future mobile communication system. In FIG. 1A to FIG. 1D, an example in which the access network device is the base station is used. Actually, with reference to the foregoing descriptions, the access network device may alternatively be a device such as an RSU.

With reference to the accompanying drawings, the following describes methods provided in embodiments of this application. In the accompanying drawings corresponding to embodiments of this application, all steps indicated by dashed lines are optional steps.

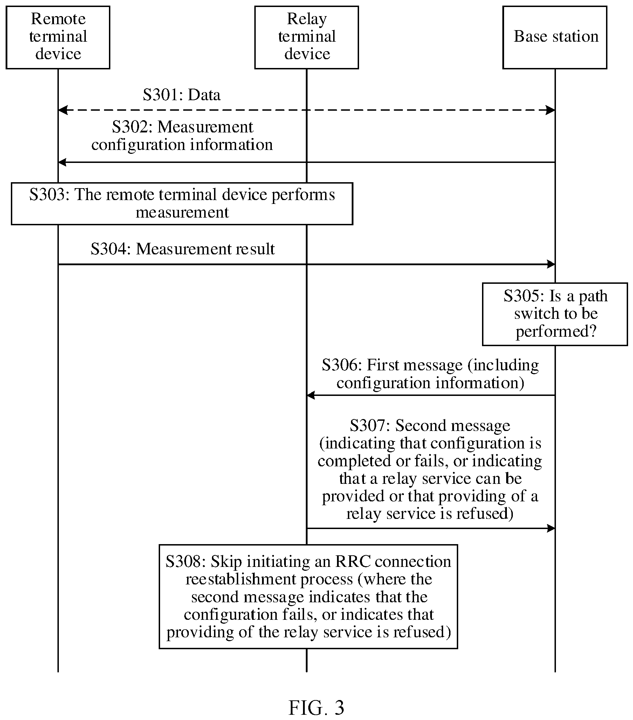

An embodiment of this application provides a first communication method. FIG. 3 is a flowchart of the method. The method relates to a process of switching to an indirect link. In the following description process, an example in which the method is applied to the network architecture shown in any one of FIG. 1A to FIG. 1D is used.

If the technical solution provided in this embodiment of this application is applied to the network architecture shown in any one of FIG. 1A to FIG. 1D, a second terminal device in the following descriptions may be the remote terminal device shown in any one of FIG. 1A to FIG. 1D. If the technical solution provided in this embodiment of this application is applied to the network architecture shown in FIG. 1A, a first terminal device in the following descriptions may be the relay terminal device in FIG. 1A, and a network device in the following descriptions may be the access network device in FIG. 1A. If the technical solution provided in this embodiment of this application is applied to the network architecture shown in FIG. 1B, a first terminal device in the following descriptions may be the relay terminal device 1 or the relay terminal device 2 in FIG. 1B, and a network device in the following descriptions may be the access network device in FIG. 1B. If the technical solution provided in this embodiment of this application is applied to the network architecture shown in FIG. 1C, a first terminal device in the following descriptions may be the relay terminal device in FIG. 1C, and a network device in the following descriptions may be the access network device 1 in FIG. 1C. If the technical solution provided in this embodiment of this application is applied to the network architecture shown in FIG. 1D, a first terminal device in the following descriptions may be the relay terminal device 1 in FIG. 1D, and a network device in the following descriptions may be the access network device 1 in FIG. 1D; or a first terminal device in the following descriptions may be the relay terminal device 2 in FIG. 1D, and a network device in the following descriptions may be the access network device 2 in FIG. 1D. In addition, in the following descriptions, an example in which the second terminal device is remote UE and the first terminal device is relay UE is used.

S301: The remote UE performs data transmission with the network device.

S302: The network device sends an RRC message to the remote UE. Accordingly, the remote UE receives the RRC message from the network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S303: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 3, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S304: The remote UE sends a first result to the network device. Accordingly, the network device receives the first result from the remote UE. The first result is, for example, the measurement result or a selection result. In FIG. 3, an example in which the first result is the measurement result is used.

The measurement result is, for example, a measurement report obtained by measuring at least one UE by the remote UE. The selection result is a result of selecting the relay UE by the remote UE, for example, includes an ID of the selected relay UE. Optionally, measurement information of the remote UE and the like may further be included.

If an application scenario of this embodiment of this application is switching between indirect links, communication between the remote UE and the network device in S301 to S304 is all performed through forwarding via relay UE connected to the remote UE before the link switch, and relay UE in the following descriptions is relay UE connected to the remote UE after the link switch.

S305: The network device determines, based on the measurement result or the selection result, whether the remote UE is to perform a path switch. If the network device determines that the remote UE is to perform the path switch, S306 and S307 are performed; otherwise, S306 and S307 are not performed.

S306: The network device sends a first message to the relay UE. Accordingly, the relay UE receives the first message from the network device. In this embodiment of this application, the first message is, for example, an RRC reconfiguration message.

The RRC reconfiguration message may include configuration information, and the configuration information may be for configuring the relay UE to provide a relay service for the remote UE. For example, the configuration information includes configuration information of a Uu interface and configuration information of a sidelink. The sidelink is a link between the remote UE and the relay UE. The relay UE provides the relay service for the remote UE through the sidelink. After the relay UE receives the RRC reconfiguration message, if the relay UE considers that the relay service can be provided for the remote UE, the relay UE may perform configuration, for example, may configure a Uu link and the sidelink, based on the configuration information included in the RRC reconfiguration message. If the relay UE refuses to provide the relay service for the remote UE, the relay UE does not need to perform configuration based on the configuration information included in the RRC reconfiguration message.

In the RRC reconfiguration message, a related configuration for performing relay by the relay UE and a Uu configuration on a service of the relay UE may be separately indicated, for example, indicated by different information elements. For example, the Uu configuration on the service of the relay UE may be carried in an original information element; and the related configuration for performing relay by the relay UE may be carried in a newly added information element, or an additional indication may be newly added for the related configuration for performing relay by the relay UE, to indicate that the configuration is a configuration for supporting a relay service.

S307: The relay UE sends a second message to the network device. Accordingly, the network device receives the second message from the relay UE.

The second message may indicate that the configuration of the relay UE is completed, or indicate that the configuration of the relay UE fails. Alternatively, the second message may indicate that the relay UE can provide the relay service, or indicate that the relay UE refuses to provide the relay service. If the second message indicates that the configuration of the relay UE is completed, it may also be considered as that the second message implicitly indicates that the relay UE can provide the relay service. If the second message indicates that the configuration of the relay UE fails, it may also be considered as that the second message implicitly indicates that the relay UE refuses to provide the relay service.

In this embodiment of this application, the first message and the second message may be messages of a same type. For example, both are messages of an RRC reconfiguration type. The first message is the RRC reconfiguration message, and the second message is an RRC reconfiguration complete (complete) message. Alternatively, the first message and the second message may be messages of different types. For example, the first message is the RRC reconfiguration message, and the second message is a sidelink UE information (sidelink UE information, SUI) message.

In addition, the second message may indicate a success (including indicating that the configuration of the relay UE is completed or indicating that the relay UE can provide the relay service for the remote UE), or may indicate a failure (including indicating that the configuration of the relay UE fails or indicating that the relay UE refuses to provide the relay service for the remote UE). In this case, the second message may indicate the success and the failure by using messages of a same type or using a same message. For example, the second message is an RRC reconfiguration complete message, and the RRC reconfiguration complete message may indicate the success, or may indicate the failure. If the RRC reconfiguration complete message indicates the failure, a first information element may be newly added to the RRC reconfiguration complete message, and the first information element indicates the failure. In this case, after receiving the second message, the network device needs to parse a message body of the second message to determine the success or the failure. The messages of the same type or the same message indicate both the success and the failure, and there is no need to use messages of excessive types, so that a process of identifying messages of different types by the network device can be simplified.

Alternatively, the second message may indicate the success and the failure by using messages of different types. For example, when the second message indicates the success, the second message may be an RRC reconfiguration complete message. When the second message indicates the failure, the second message may be the SUI message or a failure information (failure information) message, or may be a message newly added in this embodiment of this application. For example, the second message is a message specially for indicating whether a terminal device provides the relay service. In this case, the network device does not need to parse a message body of the second message, but can determine the success or the failure based on type information carried in a message header of the second message. This helps reduce workload of the network device.

For example, if the relay UE performs configuration based on the configuration information included in the RRC reconfiguration message, the configuration succeeds, and the relay UE determines that the relay service can be provided, the second message may indicate that the configuration of the relay UE is completed, or indicate that the relay UE can provide the relay service. For another example, if the relay UE performs configuration based on the configuration information included in the RRC reconfiguration message, and the configuration fails, the second message may indicate that the configuration of the relay UE fails, or indicate that the relay UE refuses to provide the relay service. For another example, if the relay UE determines that a part of parameters in the configuration information included in the RRC reconfiguration message are not supported, the second message may indicate that the relay UE refuses to provide the relay service. For still another example, if the relay UE does not perform configuration based on the configuration information included in the RRC reconfiguration message, and the relay UE determines to refuse to provide the relay service, the second message may indicate that the relay UE refuses to provide the relay service.

In an optional implementation, if the second message indicates that the configuration of the relay UE fails, or indicates that the relay UE refuses to provide the relay service, the second message may further include a cause value. The cause value may indicate a cause of refusing, by the relay UE, to provide the relay service, so that the network device can clarify the cause of a case in which the relay UE cannot provide the relay service, and the network device can take a corresponding measure. The cause value may alternatively implicitly indicate that the configuration fails. That is, if the second message includes a cause value indication, it indicates that the configuration fails or rejection of providing the relay service is refused. If the second message does not include a cause value indication, it indicates that the configuration succeeds, or indicates that the relay service can be provided. The cause of refusing, by the relay UE, to provide the relay service may include one or more of the following: The relay UE does not support a configuration of the Uu interface (that is, does not support the configuration that is of the Uu interface and that is included in the configuration information), the relay UE does not support a configuration of a PC5 interface (that is, does not support the configuration that is of the PC5 interface and that is included in the configuration information), admission control (admission control) performed by the relay UE on the remote UE fails, the configuration performed by the relay UE based on the configuration information fails, the relay UE does not support an integrity protection algorithm configured by using the configuration information (does not support an integrity protection algorithm information comprised in the configuration message) , the relay UE does not support a 5G QoS identifier (5G QoS identifier, 5QI) or a PC5 5G QoS identifier (PC5 5QI, PQI) configured by using the configuration information, the relay UE cannot identify a quality of service (quality of service, QoS) flow (flow) ID indicated by the configuration information, the relay UE does not support a network slice indicated by the configuration information, battery power of the relay UE is insufficient, a packet data convergence protocol (packet data convergence protocol, PDCP) of the relay UE is overloaded, or the relay UE does not support a computing capability indicated by the configuration information. For example, the cause of refusing, by the relay UE, to provide the relay service is that the relay UE does not support the configuration of the Uu interface; the cause of refusing, by the relay UE, to provide the relay service is that the relay UE does not support the configuration of the PC5 interface; the cause of refusing, by the relay UE, to provide the relay service is that the relay UE cannot identify the QoS flow ID indicated by the configuration information; or the cause of refusing, by the relay UE, to provide the relay service is that the relay UE does not support the network slice indicated by the configuration information and that the battery power of the relay UE is insufficient.

If the second message indicates the success and the failure by using the messages of the same type or the same message, optionally, the first information element and a second information element may be newly added to the second message if the second message indicates the failure, where the first information element may indicate the failure, and the second information element is for carrying the cause value. For example, the second message is the RRC reconfiguration complete message, and the RRC reconfiguration complete message may indicate the success, or may indicate the failure. If the RRC reconfiguration complete message indicates the failure, the first information element and the second information element may be newly added to the RRC reconfiguration complete message, the first information element indicates the failure, and the second information element is for carrying the cause value.

Alternatively, if the second message indicates the success and the failure by using the messages of the different types, optionally, a third information element may be added to the second message if the second message indicates the failure, where the third information element is for carrying the cause value. For example, when the second message indicates the success, the second message may be the RRC reconfiguration complete message. When the second message indicates the failure, the second message may be the SUI message, and the third information element is newly added to the SUI message, where the third information element may carry the cause value. It can be learned that, because the second message indicates the success and the failure by using the messages of the different types, the second message implicitly indicates the failure. In this case, a small quantity of information elements are newly added to the second message. This helps reduce transmission overheads.

S308: The relay UE does not initiate an RRC reestablishment process.

If the second message indicates that the configuration of the relay UE fails, or indicates that the relay UE refuses to provide the relay service, S308 may be performed. In this case, because the network device has learned that the relay UE does not provide the relay service, the relay UE may not initiate the RRC reestablishment process, but continues to perform normal communication with the network device. Therefore, service quality of the relay UE is improved, and a resource consumed in the RRC reestablishment procedure is reduced. It may be understood that, that the relay UE does not initiate the RRC reestablishment process may mean that the relay UE continues to communicate with the network device through an existing RRC connection.

That the relay UE does not initiate the RRC reestablishment process may be represented as follows: The relay UE continues to apply a configuration that is of a connection between the relay UE and the network device and that is before the first message is received. In other words, a status of the connection between the relay UE and the network device does not change. In other words, if the configuration of the connection (in other words, the status of the connection) between the relay UE and the network device does not change, it may implicitly indicate that the relay UE does not initiate RRC reestablishment.

However, if the second message indicates that the configuration of the relay UE is completed, or indicates that the relay UE can provide the relay service, S207 shown in FIG. 2 may be performed. In addition, after configuration of the remote UE is also completed, the relay UE can provide the relay service.

Alternatively, even if the second message indicates that the configuration of the relay UE fails, or indicates that the relay UE refuses to provide the relay service, S207 shown in FIG. 2 may have occurred. For example, S207 is performed before the network device receives the second message. In this case, the remote UE needs to determine that the path switch fails. How the remote UE determines that the path switch fails is described in the following embodiments.

In this embodiment of this application, regardless of whether the relay UE can provide the relay service, the relay UE can send the second message to the network device for notification, so that the network device can learn whether the relay UE can provide the relay service. Therefore, if the relay UE refuses to provide the relay service, because the network device can also learn of the case, the relay UE does not need to enter the RRC reestablishment procedure, but can continue to work normally within coverage of the network device, to improve the service quality of the relay UE, and reduce the resource consumed in the RRC reestablishment procedure.

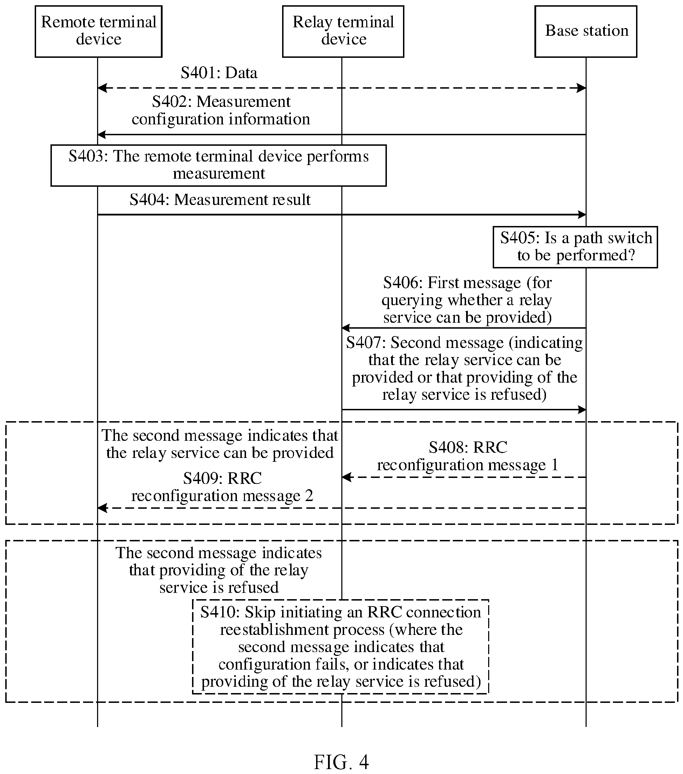

An embodiment of this application provides a second communication method. FIG. 4 is a flowchart of the method. The method relates to a process of switching to an indirect link. In the following description process, an example in which the method is applied to the network architecture shown in any one of FIG. 1A to FIG. 1D is used. For devices in FIG. 1A to FIG. 1D that relay UE, remote UE, and a network device in this embodiment of this application are, refer to the descriptions of the first communication method.

S401: The remote UE performs data transmission with the network device.

S402: The network device sends an RRC message to the remote UE. Accordingly, the remote UE receives the RRC message from the network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information includes related information used by the remote UE to select the relay UE, for example, may include measurement configuration information for configuring measurement performed by the remote UE to select the relay UE.

S403: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 4, an example in which the remote UE measures the other UE is used.

The remote UE may measure the other UE by measuring the discovery message from the other UE, or may measure other information from the other UE, for example, a data signal from the other UE. This is not limited herein. The remote UE may select the other UE based on a measurement result.

S404: The remote UE sends a first result to the network device. Accordingly, the network device receives the first result from the remote UE. The first result is, for example, the measurement result or a selection result. In FIG. 4, an example in which the first result is the measurement result is used.

The measurement result is, for example, a measurement report obtained by measuring at least one UE. The selection result is a result of selecting the relay UE by the remote UE, for example, includes an ID of the selected relay UE. Optionally, measurement information of the remote UE and the like may further be included.

If an application scenario of this embodiment of this application is switching between indirect links, communication between the remote UE and the network device in S401 to S404 is all performed through forwarding via relay UE connected to the remote UE before the link switch, and relay UE in the following descriptions is relay UE connected to the remote UE after the link switch.

S405: The network device determines, based on the measurement result or the selection result, whether the remote UE is to perform a path switch. If the network device determines that the remote UE is to perform the path switch, S406 is proceeded to; otherwise, no subsequent step is performed.

S406: The network device sends a first message to the relay UE. Accordingly, the relay UE receives the first message from the network device. The first message may be for querying whether the relay UE can provide a relay service. In this embodiment of this application, the first message is, for example, an RRC reconfiguration message, or the first message may be a message that is newly added in this embodiment of this application and that is specially for querying whether a terminal device can provide the relay service.

In this embodiment of this application, the network device first does not send configuration information to the relay UE, but first queries, by using the first message, whether the relay UE can provide the relay service. If the relay UE can provide the relay service, the network device may send the configuration information to the relay UE, so that sending of the configuration information is more effective. Alternatively, the network device sends one or more sets of configuration information to the relay UE, to query whether the relay UE can provide the relay service based on a corresponding configuration.

In an optional implementation, the first message may include one or more of the following: an identifier of the remote UE, integrity protection algorithm information or integrity protection rate information, encryption algorithm information or encryption rate information, a PQI or a 5QI, QoS, network slice information, configuration information, or computing capability information. For example, the first message includes the identifier of the remote UE; the first message includes the PQI; the first message includes the configuration information; or the first message includes the identifier of the remote UE and the network slice information. The first message may be for implicitly querying, by using one or more of the foregoing included in the first message, whether the relay UE can provide the relay service. Alternatively, the first message further includes query information in addition to one or more of the foregoing, where the query information is for querying whether the relay UE can provide the relay service. For descriptions of the configuration information, refer to the embodiment shown in FIG. 3.

The integrity protection algorithm information or the integrity protection rate information, the encryption algorithm information or the encryption rate information, the configuration information, the PQI or the 5QI, the QoS, the network slice information, the computing capability information, and the like are all needed by the remote UE, or in other words, are capabilities needed by the relay UE to perform relay. The first message includes information about a related capability needed by the relay UE to perform relay, so that the relay UE can better determine whether the relay UE can provide the relay service for the remote UE. For example, if the relay UE does not have the capability indicated by the first message, the relay UE can determine to refuse to provide the relay service for the remote UE, so that determining of the relay UE is more accurate. In embodiments of this application, an identifier of UE is, for example, an ID of the UE, and the ID of the UE is, for example, a layer 2 (layer 2) ID of the UE or an ID of an application (application, APP) that is installed for the UE and that needs the relay service.

S407: The relay UE sends a second message to the network device. Accordingly, the network device receives the second message from the relay UE. The second message may indicate that the relay UE can provide the relay service, or indicate that the relay UE refuses to provide the relay service.

In an optional implementation, when the first message includes one or more sets of configuration information, if the second message indicates that the relay UE can provide the relay service, the second message may further include first indication information that indicates configuration information for which the relay UE can provide the relay service. That is, the first indication information indicates that the UE can provide the relay service for one or more sets of configuration information.

In an optional implementation, if the second message indicates that the relay UE refuses to provide the relay service, the second message may further include a cause value. The cause value may indicate a cause of refusing, by the relay UE, to provide the relay service, so that the network device can clarify the cause of a case in which the relay UE cannot provide the relay service, and the network device can take a corresponding measure. The cause of refusing, by the relay UE, to provide the relay service may include one or more of the following: The relay UE does not support a configuration of a Uu interface (that is, does not support the configuration that is of the Uu interface and that is included in the first message), the relay UE does not support a configuration of a PC5 interface (that is, does not support the configuration that is of the PC5 interface and that is included in the first message), admission control performed by the relay UE on the remote UE fails, the relay UE does not support an integrity protection algorithm configured by using the first message, the relay UE does not support the 5QI or the PQI configured by using the first message, the relay UE cannot identify the QoS flow ID indicated by the first message, the relay UE does not support a network slice indicated by the first message, battery power of the relay UE is insufficient, a PDCP of the relay UE is overloaded, or the relay UE does not support a computing capability indicated by the first message. For example, the cause of refusing, by the relay UE, to provide the relay service is that the relay UE does not support the configuration of the Uu interface; the cause of refusing, by the relay UE, to provide the relay service is that the relay UE does not support the configuration of the PC5 interface; the cause of refusing, by the relay UE, to provide the relay service is that the relay UE cannot identify the QoS flow ID indicated by the first message; or the cause of refusing, by the relay UE, to provide the relay service is that the relay UE does not support the network slice indicated by the first message and that the battery power of the relay UE is insufficient.

For more content of S407, for example, an implementation of the second message, refer to S307 in the embodiment shown in FIG. 3.

If the second message indicates that the relay UE can provide the relay service, and the second message includes no configuration information, S408 and S409 may be proceeded to. Alternatively, if the second message indicates that the relay UE can provide the relay service, and the second message includes configuration information, S409 may be proceeded to, and S408 does not need to be performed. If the second message indicates that the relay UE refuses to provide the relay service, S410 may be performed. In addition, if the second message indicates that the relay UE refuses to provide the relay service, because the network device has learned that the relay UE does not provide the relay service, the relay UE may not initiate an RRC reestablishment process, but continues to perform normal communication with the network device. Therefore, service quality of the relay UE is improved, and a resource consumed in the RRC reestablishment procedure is reduced.

That the relay UE does not initiate the RRC reestablishment process may be represented as follows: The relay UE continues to apply a configuration that is of a connection between the relay UE and the network device and that is before the first message is received. In other words, a status of the connection between the relay UE and the network device does not change. In other words, if the configuration of the connection (in other words, the status of the connection) between the relay UE and the network device does not change, it may implicitly indicate that the relay UE does not initiate RRC reestablishment.

S408: The network device sends an RRC reconfiguration message to the relay UE. Accordingly, the relay UE receives the RRC reconfiguration message from the network device. To distinguish from another RRC reconfiguration message, the RRC reconfiguration message in S408 is referred to as an RRC reconfiguration message 1.

The RRC reconfiguration message 1 may include configuration information. For example, the configuration information is referred to as configuration information 1. The configuration information 1 includes, for example, configuration information of the Uu interface and configuration information of a sidelink. The sidelink is a link between the remote UE and the relay UE. The relay UE provides the relay service for the remote UE through the sidelink. If the relay UE can provide the relay service for the remote UE, the network device may send the configuration information 1 to the relay UE. After receiving the RRC reconfiguration message 1, the relay UE may perform configuration, for example, may configure a Uu link and the sidelink, based on the configuration information 1.

In this embodiment of this application, although the network device sends the configuration information 1 after the relay UE determines that the relay service can be provided, the configuration of the relay UE may still fail. For example, the relay UE enters an area with a poor signal; or the relay UE still does not support a part of parameters included in the configuration information 1, and the part of parameters are not included in the first message. In this case, if the configuration of the relay UE fails, the relay UE may send the second message to the network device. In this case, the second message may indicate that the configuration fails.

S409: The network device sends an RRC reconfiguration message to the remote UE, and the remote UE receives the RRC reconfiguration message from the network device. To distinguish from another RRC reconfiguration message, the RRC reconfiguration message in S409 is referred to as an RRC reconfiguration message 2.

The RRC reconfiguration message 2 may include information configured by the network device for the remote UE. For example, the information included in the RRC reconfiguration message 2 is referred to as configuration information 2, and the configuration information 2 may include the configuration information of the Uu interface and the configuration information of the sidelink. If the relay UE can provide the relay service for the remote UE, the network device may send the configuration information 2 to the remote UE. After receiving the RRC reconfiguration message 2, the remote UE may perform configuration, for example, may configure the Uu link and the sidelink, based on the configuration information 2.

After configuration of the remote UE and the relay UE is completed, the relay UE can provide the relay service for the remote UE, so that the remote UE can communicate with the network device via the relay UE.

S410: The relay UE does not initiate the RRC reestablishment process.

If the second message indicates that the configuration of the relay UE fails, or indicates that the relay UE refuses to provide the relay service, S410 may be performed. In this case, because the network device has learned that the relay UE does not provide the relay service, the relay UE may not initiate the RRC reestablishment process, but continues to perform normal communication with the network device, to improve the service quality of the relay UE, and reduce the resource consumed in the RRC reestablishment procedure.

For more content of S410, refer to S308 in the embodiment shown in FIG. 3.

In this embodiment of this application, the network device may query, by using the first message, whether the relay UE can provide the relay service. For example, the first message is the message specially for querying whether the terminal device can provide the relay service, and the second message is not an RRC reconfiguration complete message. In this case, in this embodiment of this application, it is equivalent to that a message in the RRC reestablishment process is not used, and an existing RRC reestablishment procedure is not changed. In this way, the technical solution in this embodiment of this application can be better compatible with an existing technology.

Next, a question is considered. It can be learned from the foregoing procedures that, to implement the path switch, the remote UE needs to measure the other UE. If a reporting condition of the measurement report is satisfied, the remote UE may send the measurement result to the network device. Regardless of whether the remote UE sends the measurement result to the network device, a measurement process may be continuously performed, which consumes high battery power of the remote UE. In addition, the remote UE usually performs measurement based on the discovery message. In this case, the other UE (for example, the relay UE) needs to send the discovery message, so that the remote UE performs measurement based on the discovery message. However, it is possible that one UE does not continuously send discovery messages. Therefore, the remote UE needs to first send the discovery message to the other UE, where the discovery message requests, for example, a corresponding service (for example, the relay service). After receiving the discovery message, the other UE sends the discovery message to the remote UE if the service can be provided. In this case, the remote UE may perform measurement based on the received discovery message. It can be learned that, to stimulate the relay UE to send the discovery message to the remote UE, the remote UE may need to send discovery messages for a plurality of times and receive discovery messages for the plurality of times. This also needs to consume a large quantity of resources.

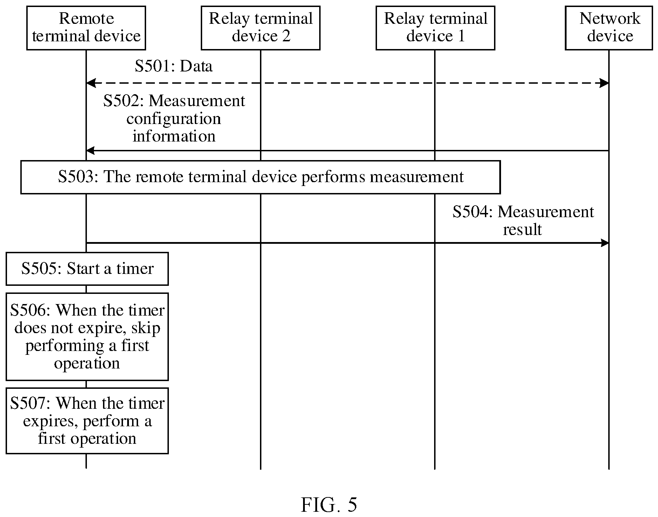

To resolve this problem, an embodiment of this application provides a third communication method. According to the method, a measurement resource can be saved, and battery power of remote UE can be saved. FIG. 5 is a flowchart of the method. The method may relate to a process of switching from a direct link to an indirect link, a process of switching between direct links, a process of switching from the indirect link to the direct link, or a process of switching between indirect links. In the following description process, an example in which the method is applied to the network architecture shown in any one of FIG. 1A to FIG. 1D is used.

If the technical solution provided in this embodiment of this application is applied to the network architecture shown in any one of FIG. 1A to FIG. 1D, a second terminal device in the following descriptions may be the remote terminal device shown in any one of FIG. 1A to FIG. 1D. If the technical solution provided in this embodiment of this application is applied to the network architecture shown in FIG. 1A, a first terminal device in the following descriptions may be the relay terminal device in FIG. 1A, and a network device in the following descriptions may be the access network device in FIG. 1A. If the technical solution provided in this embodiment of this application is applied to the network architecture shown in FIG. 1B, a first terminal device in the following descriptions may be the relay terminal device 1 or the relay terminal device 2 in FIG. 1B, and a network device in the following descriptions may be the access network device in FIG. 1B. If the technical solution provided in this embodiment of this application is applied to the network architecture shown in FIG. 1C, a first terminal device in the following descriptions may be the relay terminal device in FIG. 1C, and a network device in the following descriptions may be the access network device 1 or the access network device 2 in FIG. 1C. If the technical solution provided in this embodiment of this application is applied to the network architecture shown in FIG. 1D, a first terminal device in the following descriptions may be the relay terminal device 1 in FIG. 1D, and a network device in the following descriptions may be the access network device 1 in FIG. 1D; or a first terminal device in the following descriptions may be the relay terminal device 2 in FIG. 1D, and a network device in the following descriptions may be the access network device 2 in FIG. 1D.

In addition, in the following descriptions, an example in which the second terminal device is remote UE and the first terminal device is relay UE is used. A relay terminal device 1 and a relay terminal device 2 in FIG. 5 merely indicate that there may be a plurality of UEs that can serve as relay UEs, and the remote UE may measure the plurality of UEs when performing measurement.

S501: The remote UE performs data transmission with the network device.

S502: The network device sends an RRC message to the remote UE. Accordingly, the remote UE receives the RRC message from the network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S503: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 5, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S504: The remote UE sends a first result to the network device. Accordingly, the network device receives the first result from the remote UE. The first result is, for example, the measurement result or a selection result. In FIG. 5, an example in which the first result is the measurement result is used.

The measurement result includes, for example, a report of measuring at least one UE by the remote UE. The selection result is a result of selecting the relay UE by the remote UE, for example, includes an ID of the selected relay UE. Optionally, measurement information of the remote UE and the like may further be included.

In this embodiment of this application, after the remote UE sends the measurement result, when a first condition is not satisfied, the remote UE does not perform a first operation, where the first operation may be considered as an operation related to a measurement process.

The first operation may include one or more of the following: sending the discovery message, measuring the other UE, or sending a new first result to the network device (in other words, sending the first result to the network device). For example, the first operation includes the sending the discovery message; the first operation includes the measuring the other UE; the first operation includes the sending a new first result to the network device; or the first operation includes the sending the discovery message and the measuring the other UE.

For example, if the first operation includes the sending the discovery message, does not include the measuring the other UE, and does not include the sending a new first result to the network device, the remote UE may not send the discovery message if the first condition is not satisfied (where for example, if the remote UE sends the discovery message before, the remote UE stops sending the discovery message if the first condition is not satisfied). However, if the remote UE receives the discovery message from the other UE, the remote UE may still perform measurement based on the received discovery message and the measurement configuration information in S502, to obtain a new measurement result. When a reporting condition of the measurement report is satisfied, the remote UE may further send the new first result to the network device. Alternatively, if the first operation includes the measuring the other UE, does not include the sending the discovery message, and does not include the sending a new first result to the network device, the remote UE may not measure the other UE if the first condition is not satisfied. Because the other UE does not need to be measured, the remote UE may not need to send the discovery message; or the remote UE may send the discovery message, but the remote UE does not need to perform measurement even if the remote UE receives the discovery message from the other UE. In addition, the remote UE does not obtain the measurement report because the other UE does not need to be measured, and therefore does not need to send the new first result to the network device. Alternatively, if the first operation includes the sending a new measurement result to the network device, does not include the sending the discovery message, and does not include the measuring the other UE, the remote UE may send or not send the discovery message if the first condition is not satisfied. In addition, if the remote UE receives the discovery message from the other UE, the remote UE may still perform measurement based on the received discovery message, but the measurement report may not be formed after the remote UE performs measurement. That is, measurement may be performed, but the measurement report is not obtained. Alternatively, if the remote UE performs measurement, the remote UE may alternatively obtain the measurement report. However, even if a reporting condition of the measurement report is satisfied, the remote UE does not send the measurement report to the network device.

In this embodiment of this application, the first condition is related to a timer. Refer to the following descriptions.

S505: The remote UE starts the timer.

For example, the remote UE may start the timer when S504 is completed, that is, when sending the measurement result to the network device is completed. That the first condition is satisfied is, for example, that the timer expires, and that the first condition is not satisfied is, for example, that the timer does not expire.

S506: When the timer does not expire, the remote UE does not perform the first operation.

In other words, in this embodiment of this application, if the timer does not expire, the remote UE may not perform the first operation. Because the remote UE has sent the measurement result to the network device, and the network device can determine, based on the measurement result, whether the remote UE can perform a path switch, determining of the network device is not affected greatly even if the remote UE does not perform measurement, and does not send the new measurement result to the network device. In addition, in this manner, the measurement process of the remote UE can be reduced, a resource consumed in the measurement process can be reduced, and the battery power of the remote UE can also be saved.

S507: When the timer expires, the remote UE may perform the first operation.

If the timer expires, and the remote UE does not receive configuration information (for configuring the remote UE to perform a path switch) from the network device, the remote UE may continue to perform the first operation, to send the new measurement result to the network device again. Certainly, it is merely described herein that the remote UE may perform the first operation if the timer expires and the remote UE does not receive the configuration information (for configuring the remote UE to perform the path switch) from the network device. However, whether to perform the first operation depends on an implementation of the remote UE. A possibility is merely described herein, and does not constitute a limitation on behavior of the remote UE. For example, if the timer expires, the remote UE may measure the other UE. When the reporting condition of the measurement report is satisfied, the remote UE sends the new measurement result to the network device. If the network device determines, based on the new measurement result, that the remote UE can perform the path switch, the network device may separately send configuration information to the remote UE and the relay UE (in a case of switching to the indirect link).

In this embodiment of this application, after sending the measurement result to the network device, the remote UE may start the timer. When the timer does not expire, the remote UE may not need to perform a measurement-related operation, to reduce the measurement process of the remote UE, and save the resource needed in the measurement process. In addition, because the remote UE reduces the related operation, the battery power of the remote UE can also be saved.

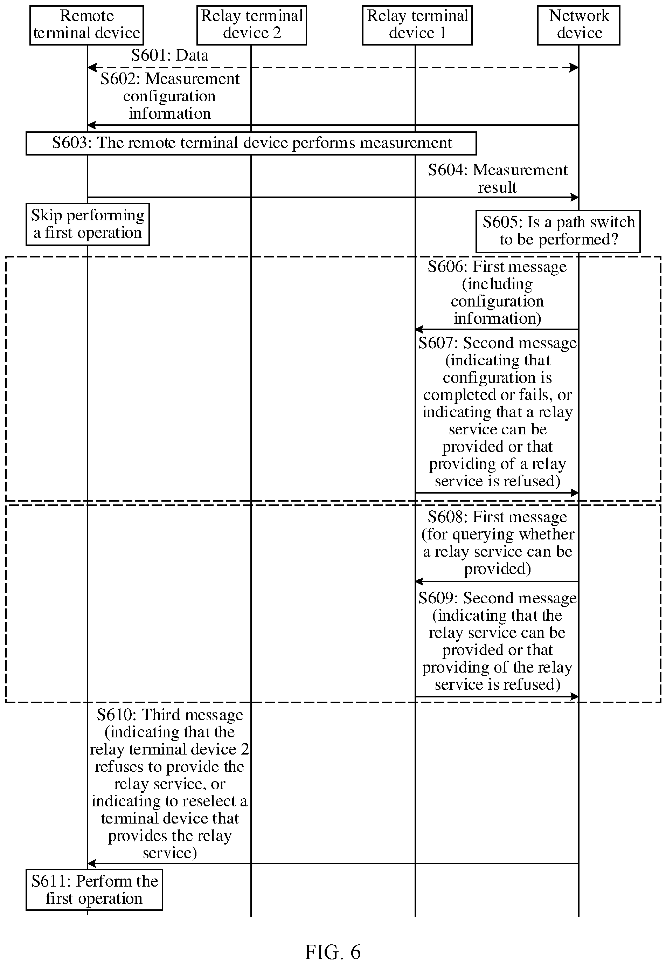

An embodiment of this application provides a fourth communication method. FIG. 6 is a flowchart of the method. The method may relate to a process of switching from a direct link to an indirect link, a process of switching between direct links, a process of switching from the indirect link to the direct link, or a process of switching between indirect links. In the following description process, an example in which the method is applied to the network architecture shown in any one of FIG. 1A to FIG. 1D is used. For content such as devices in FIG. 1A to FIG. 1D that relay UE, remote UE, and a network device in this embodiment of this application are, refer to the descriptions of the third communication method.

In addition, in the following descriptions, an example in which a second terminal device is the remote UE and a first terminal device is the relay UE is used. A relay terminal device 1 and a relay terminal device 2 in FIG. 6 merely indicate that there may be a plurality of UEs that can serve as relay UEs, and the remote UE may measure the plurality of UEs when performing measurement. The relay UE serving as the first terminal device in the following descriptions is, for example, the relay terminal device 1.

S601: The remote UE performs data transmission with the network device.

S602: The network device sends an RRC message to the remote UE. Accordingly, the remote UE receives the RRC message from the network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S603: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 6, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S604: The remote UE sends a first result to the network device. Accordingly, the network device receives the first result from the remote UE. The first result is, for example, the measurement result or a selection result. In FIG. 6, an example in which the first result is the measurement result is used.

The measurement result includes, for example, a report of measuring at least one UE by the remote UE. The selection result is a result of selecting the relay UE by the remote UE, for example, includes an ID of the selected relay UE. Optionally, measurement information of the remote UE and the like may further be included.

In this embodiment of this application, after the remote UE sends the first result, when a first condition is not satisfied, the remote UE does not perform a first operation, where the first operation may be considered as an operation related to a measurement process. For descriptions of the first operation, refer to the embodiment shown in FIG. 3.

In this embodiment of this application, the first condition is related to a message from the network device. Refer to the following descriptions.

S605: The network device determines, based on the measurement result or the selection result, whether the remote UE is to perform a path switch. If the network device determines that the remote UE is to perform the path switch, S606 and S607 are performed, or S608 and S609 are performed; or if the network device determines that the remote UE is not to perform the path switch, no subsequent step is performed, or S610 may be performed.

S606: The network device sends a first message to the relay UE. Accordingly, the relay UE receives the first message from the network device.

For more content of S606, refer to S306 in the embodiment shown in FIG. 3.

S607: The relay UE sends a second message to the network device. Accordingly, the network device receives the second message from the relay UE.

The second message may indicate that configuration of the relay UE is completed, or indicate that configuration of the relay UE fails. Alternatively, the second message may indicate that the relay UE can provide a relay service, or indicate that the relay UE refuses to provide a relay service. For example, in this embodiment of this application, the second message indicates that the configuration of the relay UE fails, or indicates that the relay UE refuses to provide the relay service.

For more content of S607, refer to S307 in the embodiment shown in FIG. 3.

S608: The network device sends a first message to the relay UE. Accordingly, the relay UE receives the first message from the network device. The first message may be for querying whether the relay UE can provide a relay service.

For more content of S608, refer to S406 in the embodiment shown in FIG. 4.

S609: The relay UE sends a second message to the network device. Accordingly, the network device receives the second message from the relay UE.

The second message may indicate that configuration of the relay UE is completed, or indicate that configuration of the relay UE fails. Alternatively, the second message may indicate that the relay UE can provide the relay service, or indicate that the relay UE refuses to provide the relay service. For example, in this embodiment of this application, the second message indicates that the configuration of the relay UE fails, or indicates that the relay UE refuses to provide the relay service.

For more content of S609, refer to S407 in the embodiment shown in FIG. 4.

A process S606 and S607 is parallel to a process S608 and S609, and only either process needs to be performed.

S610: The network device sends a third message to the remote UE. Accordingly, the remote UE receives the third message from the network device. The third message may indicate that the relay UE refuses to provide the relay service, or indicate to reselect UE that can provide the relay service. The third message is, for example, an RRC message, or may be another message.

S611: The remote UE performs the first operation.

In this embodiment of this application, if the remote UE receives the third message from the network device, it is considered that the first condition is satisfied, and the first operation may be performed. If the remote UE does not receive the third message from the network device, it is considered that the first condition is not satisfied. When the first condition is not satisfied, the remote UE does not need to perform the first operation, to reduce the measurement process of the remote UE, and save a resource needed in the measurement process. In addition, because the remote UE reduces a measurement-related operation, battery power of the remote UE can also be saved. However, when the first condition is satisfied, the remote UE learns that the UE that can provide the relay service needs to be reselected. In this case, the remote UE may trigger the measurement process, to select other relay UE.

In an optional implementation, after S604 is performed or before S604 is performed, the remote UE may further send a fourth message to the network device. The fourth message may indicate an energy saving requirement. It may be understood as that the fourth message indicates that the remote UE has the energy saving requirement. In this case, after receiving the fourth message, the network device may determine that the remote UE has the energy saving requirement. In this case, optionally, the network device may further send first information to the remote UE. Accordingly, the remote UE receives the first information from the network device. The first information may be included in the third message, or may be sent by using another message. The first information may include information about M UEs. The information about the UE is, for example, an identifier of the UE, and M is a positive integer. The M UEs are UEs that do not need to be measured, or are UEs that refuse to provide the relay service. If the remote UE receives the first information, the remote UE does not need to measure the M UEs. This reduces the measurement process of the remote UE, and reduces power consumption of the remote UE, to satisfy the energy saving requirement of the remote UE.

Optionally, the fourth message may further include information about N UEs. The information about the UE is, for example, an identifier of the UE, and N is a positive integer. The N UEs are, for example, UEs that refuse to provide the relay service. For example, if the remote UE determines, based on historical information, that the N UEs refused to provide the relay service for the remote UE, the remote UE may add the information about the N UEs to a blacklist, and send the blacklist to the network device. In this way, when configuring the remote UE to perform measurement, the network device may consider not configuring the remote UE to measure the N UEs, to reduce an invalid measurement process of the remote UE. If the fourth message includes the information about the N UEs, and the network device sends the first information, the M UEs may be determined by the network device based on the N UEs and some other factors. For example, the M UEs are the N UEs. In this case, M=N. Alternatively, the M UEs and the N UEs have no intersection. Alternatively, the M UEs and the N UEs have an intersection, but are not completely the same.

In this embodiment of this application, after the remote UE sends the measurement result to the network device, if the remote UE does not receive the third message from the network device, the remote UE may not need to perform the measurement-related operation, to reduce the measurement process of the remote UE, and save the resource needed in the measurement process. In addition, because the remote UE reduces the related operation, the battery power of the remote UE can also be saved.

Next, another question is considered. Currently, the remote UE may succeed or fail in the path switch. However, when the remote UE fails in the path switch, the remote UE cannot perform determining. To be specific, the remote UE cannot determine a case in which the path switch fails. A possible consequence is that work of the remote UE cannot not continue.

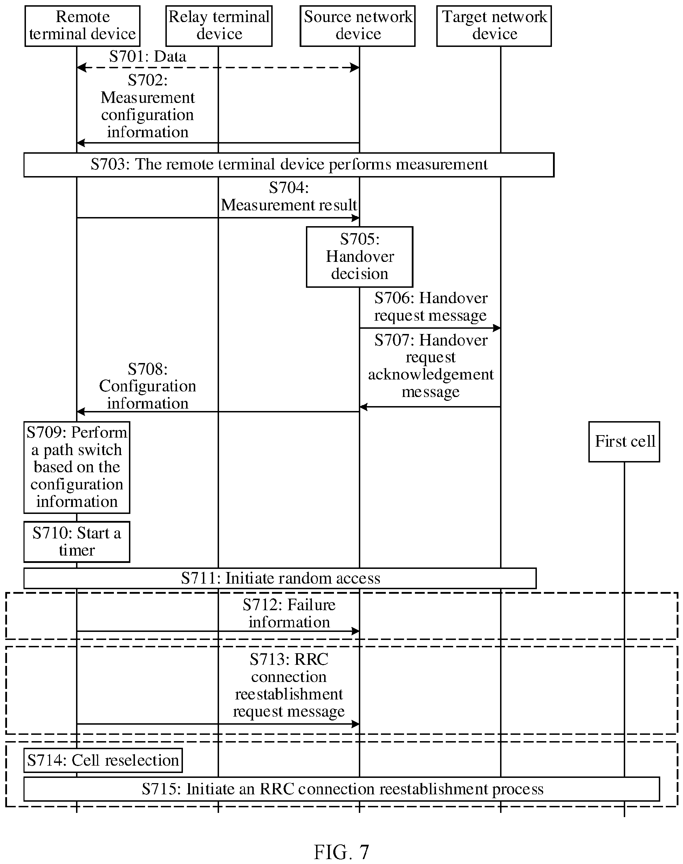

Therefore, an embodiment of this application provides a fifth communication method. According to the method, remote UE can determine a case in which a path switch fails, so that work of the remote UE can continue. FIG. 7 is a flowchart of the method. The method may relate to a process of switching from an indirect link to a direct link. In the following description process, an example in which the method is applied to the network architecture shown in FIG. 1A or FIG. 1C is used.

If the technical solution provided in this embodiment of this application is applied to the network architecture shown in FIG. 1A, it indicates that a source network device before the remote UE performs the path switch and a target network device after the remote UE performs the path switch are a same network device. In this case, a first terminal device in the following descriptions may be the relay terminal device in FIG. 1A, a second terminal device in the following descriptions may be the remote terminal device in FIG. 1A, and a network device in the following descriptions may be the access network device in FIG. 1A, where the network device is both the source network device and the target network device. If the technical solution provided in this embodiment of this application is applied to the network architecture shown in FIG. 1C, it indicates that a source network device before the remote UE performs the path switch and a target network device after the remote UE performs the path switch are different network devices. In this case, a first terminal device in the following descriptions may be the relay terminal device in FIG. 1C, a second terminal device in the following descriptions may be the remote terminal device in FIG. 1C, and a network device (which is also referred to as a first network device, where the first network device is the source network device) in the following descriptions may be the access network device 1 in FIG. 1C. In addition, the following further relates to the target network device, which may be referred to as a second network device, and may be the access network device 2 in FIG. 1C.

In addition, in the following descriptions, an example in which the second terminal device is the remote UE and the first terminal device is relay UE is used. In addition, in this embodiment of this application, an example in which the source network device and the target network device are the different network devices is used.

S701: The remote UE performs data transmission with the source network device.

S702: The source network device sends an RRC message to the remote UE. Accordingly, the remote UE receives the RRC message from the source network device. The RRC message includes, for example, measurement configuration information, and the measurement configuration information is used by the remote UE to measure a reference signal from the source network device.

S703: The remote UE measures the reference signal from the network device.

For example, the remote UE receives a synchronization signal block (synchronization signal block, SSB) or a channel state information reference signal (channel state information reference signal, CSI-RS) from the source network device, and the remote UE may measure strength of the received signal, to complete measurement of the source network device. In addition, the remote UE may further measure the target network device. For example, the remote UE receives an SSB or a CSI-RS from the target network device. The remote UE may measure strength of the received signal, to complete measurement of the target network device.

S704: The remote UE sends a measurement result to the source network device. Accordingly, the source network device receives the measurement result from the remote UE. The measurement result includes, for example, a measurement report obtained by measuring at least one frequency or cell.

Communication between the remote UE and the source network device in S701 to S704 is performed through forwarding via the relay UE.

S705: The source network device makes a handover decision (handover decision). The source network device determines, based on the measurement result, whether the remote UE can perform the path switch. In this embodiment of this application, the source network device determines, based on the measurement result, whether the remote UE can be handed over from the relay UE to the target network device. If the source network device determines that the remote UE can be handed over from the relay UE to the target network device, S706 is performed.

S706: The source network device sends a handover request (handover request) message to the target network device. Accordingly, the target network device receives the handover request message from the source network device. The handover request message may indicate that the remote UE is to be handed over to the target network device.

S707: The target network device sends a handover request acknowledgement (handover request acknowledgement) message to the source network device. Accordingly, the source network device receives the handover request acknowledgement message from the target network device. The handover request acknowledgement message may indicate that the remote UE is allowed to be handed over to the target network device, or indicate that the remote UE is not allowed to be handed over to the target network device.

If the handover request acknowledgement message indicates that the remote UE is allowed to be handed over to the target network device, S708 is proceeded to; otherwise, no subsequent step is performed.

If the target network device and the source network device are a same network device, after S705, S706 and S707 do not need to be performed, and S708 is proceeded to.

S708: The source network device sends an RRC reconfiguration message to the remote UE. Accordingly, the remote UE receives the RRC reconfiguration message from the source network device.

The RRC reconfiguration message may include configuration information. The configuration information may be for configuring the remote UE to be handed over to the target network device. For example, the configuration information may include configuration information of a Uu interface. The configuration information of the Uu interface may include an identifier of the target network device, a user ID (e.g., C-RNTI) used by the relay UE during access, and duration of a timer, for example, T304, configured to determine whether access succeeds. Optionally, a random access resource configuration and a contention-free preamble Preamble configuration that are for the relay UE to access the network device may further be included.

S709: The remote UE performs the path switch based on the configuration information. For example, the remote UE performs configuration based on the configuration information, and the remote UE initiates random access to the target network device. If the remote UE succeeds in the random access, the remote UE is successfully handed over to the target network device.

When a first condition is satisfied and the remote UE successfully accesses the target network device, the remote UE may determine that the path switch succeeds. If a first condition is not satisfied and the remote UE fails to access the target network device, the remote UE determines that the path switch fails.

In this embodiment of this application, the first condition may be related to the timer. Refer to the following descriptions.

S710: The remote UE starts the timer.

For example, the remote UE may start the timer after S708 is performed, or in other words, after the remote UE receives the configuration information from the source network device. The timer may be T304, or may be another newly introduced timer. This is not limited herein.

S711: The remote UE initiates the random access to the target network device.

If the remote UE successfully accesses the target network device before the timer expires, the remote UE determines that the path switch succeeds. If the remote UE has not successfully accessed the target network device when the timer expires, the remote UE determines that the path switch fails. In this embodiment of this application, whether the path switch succeeds is determined by using the timer. This manner is simple and easy to implement. The timing duration of the timer may be determined by the remote UE. For example, the remote UE may determine, based on historical information, time for accessing the network device, and determine the time as the timing duration of the timer. Alternatively, the timing duration of the timer may be configured and notified to the remote UE by the network device in S708. Alternatively, the timing duration of the timer may be specified in a protocol. If the random access succeeds, the timer may be stopped to avoid timer expiration.

If the remote UE successfully accesses the target network device before the timer expires, the remote UE may perform normal communication within coverage of the target network device, and no subsequent step needs to be performed. If the remote UE has not successfully accessed the target network device when the timer expires, the following steps may be proceeded to.

S712: The remote UE sends failure information to the source network device through a first path. Accordingly, the source network device receives the failure information from the remote UE through the first path. The failure information may indicate that the path switch fails. The failure information is, for example, an RRC message (RRC message). For example, the failure information may be a failure information (failure information) message, a master cell group failure information (master cell group failure information, MCG failure information) message, an RRC reconfiguration complete message, or a UE information response (UE information response) message, or may be another newly added RRC message. This is not limited herein.

The first path is a communication path between the remote UE and the source network device before the remote UE performs the path switch. Because an example in which this embodiment of this application is applied to a scenario of switching from the indirect link to the direct link is used, the first path is a communication path through which the remote UE is connected to the source network device via the relay UE. In other words, the first path is the remote UE-the relay UE-the source network device.

If the remote UE has not broken the connection to the source network device through the first path before successfully performing the path switch, the remote UE may perform S712. After the source network device receives the failure information, the remote UE may continue to communicate with the source network device through the first path. That is, because the remote UE has not broken the original communication path, the remote UE may continue to perform communication through the original communication path, and does not need to reselect a communication path. In other words, the remote UE does not initiate an RRC connection reestablishment process, to improve service continuity of the remote UE.

S713: The remote UE sends an RRC connection reestablishment request message to the source network device through a first path. Accordingly, the source network device receives the RRC connection reestablishment request message from the remote UE.

S712 and S713 are parallel steps, and only either of S712 and S713 needs to be performed. If the remote UE has not broken the connection to the source network device through the first path before successfully performing the path switch, the remote UE may alternatively perform S713 to reestablish an RRC connection within coverage of the source network device, thereby communicating with the source network device through the new connection.

S714: The remote UE performs cell reselection.

The remote UE may enter an RRC idle (idle) state, and perform cell reselection in the RRC idle state. For example, a cell reselected by the remote UE is referred to as a first cell.

S715: The remote UE initiates the RRC connection reestablishment (RRC connection reestablishment) process in the first cell, or initiates an RRC connection establishment (RRC connection establishment) process in the first cell.

If the first cell stores a context of the remote UE, the remote UE may initiate the RRC connection reestablishment process in the first cell. If the first cell stores no context of the remote UE, the remote UE may initiate the RRC connection establishment process in the first cell. For example, the remote UE may initiate the RRC connection reestablishment process in the first cell. If the first cell stores the context of the remote UE, a success probability of the RRC connection reestablishment process of the remote UE is high. If the first cell stores no context of the remote UE, and the context of the remote UE cannot be obtained through an interface of the network device, the RRC connection reestablishment process of the remote UE may fail. If the RRC connection reestablishment process of the remote UE fails, the remote UE initiates the RRC connection establishment process in the first cell again. Alternatively, the remote UE may directly initiate the RRC connection establishment process in the first cell, to reduce a possibility that the RRC reestablishment fails because the first cell stores no context of the remote UE.

The three solutions S712, S713, and S714 and S715 are parallel, and only one of the three solutions needs to be performed.

In this embodiment of this application, the remote UE may determine, based on the timer, whether the path switch succeeds or fails. A determining manner is simple and easy to implement. Even for UE with a low capability, the technical solution in this embodiment of this application can also be applied. In addition, if the path switch fails, the remote UE may perform a corresponding operation, for example, continue to perform communication within the coverage of the source network device, or may enter a new cell through cell reselection, to resume a service of the remote UE as soon as possible, and improve the service continuity.

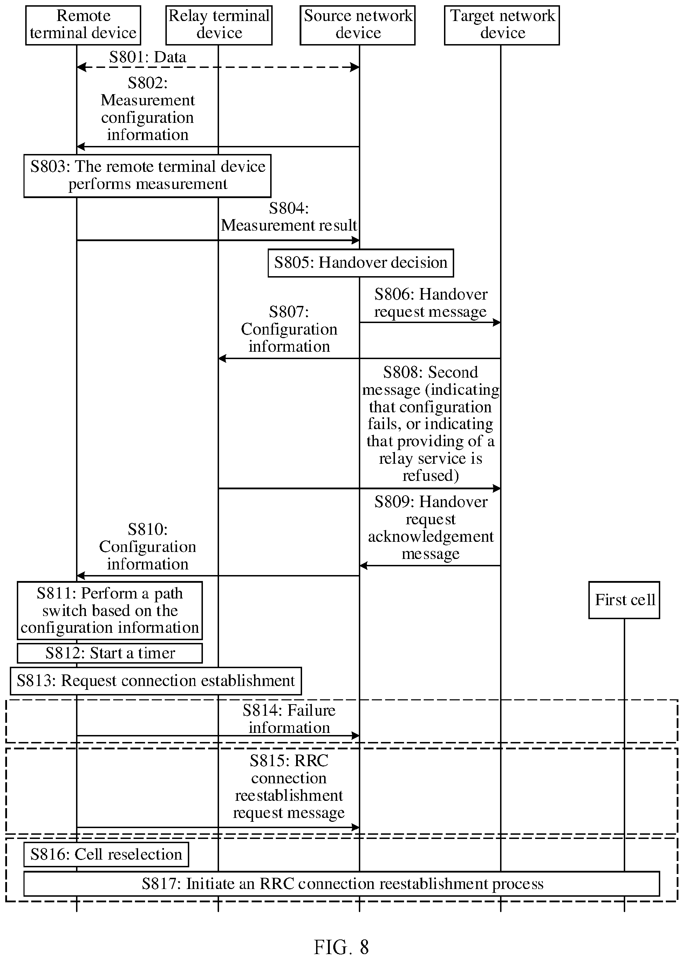

An embodiment of this application provides a sixth communication method. According to the method, remote UE can also determine a case in which a path switch fails, so that work of the remote UE can continue. FIG. 8 is a flowchart of the method. The method may relate to a process of switching between indirect links, or may relate to a process of switching from a direct link to an indirect link. In the following description process, an example in which the method is applied to the network architecture shown in any one of FIG. 1A to FIG. 1D is used.

If the technical solution provided in this embodiment of this application is applied to the network architecture shown in FIG. 1A, it indicates that a source network device before the remote UE performs the path switch and a target network device after the remote UE performs the path switch are a same network device. In this case, a first terminal device in the following descriptions may be a relay terminal device in FIG. 1A, a second terminal device in the following descriptions may be a remote terminal device in FIG. 1A, and a network device in the following descriptions may be an access network device in FIG. 1A, where the network device is both the source network device and the target network device. If the technical solution provided in this embodiment of this application is applied to the network architecture shown in FIG. 1B, it indicates that a source network device before the remote UE performs the path switch and a target network device after the remote UE performs the path switch are a same network device. In this case, a first terminal device in the following descriptions may be the relay terminal device 1 or the relay terminal device 2 in FIG. 1B, a second terminal device in the following descriptions may be the remote terminal device in FIG. 1B, and a network device in the following descriptions may be the access network device in FIG. 1B, where the network device is both the source network device and the target network device. If the technical solution provided in this embodiment of this application is applied to the network architecture shown in FIG. 1C, it indicates that the source network device before the remote UE performs the path switch and the target network device after the remote UE performs the path switch are different network devices. In this case, a first terminal device in the following descriptions may be the relay terminal device in FIG. 1C, a second terminal device in the following descriptions may be the remote terminal device in FIG. 1C, and a network device (which is also referred to as a first network device, where the first network device is the source network device) in the following descriptions may be the access network device in FIG. 1C. In addition, the following further relates to the target network device, which may be referred to as a second network device, and may be the access network device 2 in FIG. 1C. Alternatively, the source network device may be the access network device 2 in FIG. 1C, and the target network device may be the access network device 1 in FIG. 1C. If the technical solution provided in this embodiment of this application is applied to the network architecture shown in FIG. 1D, it indicates that a source network device before the remote UE performs the path switch and a target network device after the remote UE performs the path switch are different network devices. In this case, a first terminal device in the following descriptions may be the relay terminal device 1 in FIG. 1D, a second terminal device in the following descriptions may be the remote terminal device in FIG. 1D, and a network device (which is also referred to as a first network device, where the first network device is the source network device) in the following descriptions may be the access network device 1 in FIG. 1D. In addition, the following further relates to the target network device, which may be referred to as a second network device, and may be the access network device 2 in FIG. 1D. Alternatively, the first terminal device may be the relay terminal device 2 in FIG. 1D, the source network device may be the access network device 2 in FIG. 1D, and the target network device may be the access network device 1 in FIG. 1D.

In addition, in the following descriptions, an example in which the second terminal device is the remote UE and the first terminal device is relay UE is used. In addition, in this embodiment of this application, an example in which the source network device and the target network device are the different network devices is used.

S801: The remote UE performs data transmission with the source network device.

S802: The source network device sends an RRC message to the remote UE. Accordingly, the remote UE receives the RRC message from the source network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S803: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 8, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S804: The remote UE sends a first result to the network device. Accordingly, the network device receives the first result from the remote UE. The first result is, for example, the measurement result or a selection result. In FIG. 8, an example in which the first result is the measurement result is used.

The measurement result includes, for example, a report of measuring at least one UE by the remote UE. The selection result is a result of selecting the relay UE by the remote UE, for example, includes an ID of the selected relay UE. Optionally, measurement information of the remote UE and the like may further be included.

If an application scenario of this embodiment of this application is switching between the indirect links, communication between the remote UE and the network device in S801 to S804 is all performed through forwarding via relay UE connected to the remote UE before the link switch, and relay UE in the following descriptions is relay UE connected to the remote UE after the link switch.

S805: The source network device makes a handover decision (handover decision). The source network device determines, based on the measurement result, whether the remote UE can perform the path switch. In this embodiment of this application, the source network device determines, based on the measurement result, whether the remote UE can be handed over from the relay UE to the target network device. If the source network device determines that the remote UE can be handed over from the relay UE to the target network device, S806 is performed.

S806: The source network device sends a handover request (handover request) message to the target network device. Accordingly, the target network device receives the handover request message from the source network device. The handover request message may indicate that the remote UE is to be handed over to the target network device. The target network device serves the relay UE. Because the remote UE is to switch to perform communication via the relay UE, the source network device is to request the handover from the target network device serving the relay UE.

S807: The target network device sends an RRC reconfiguration message to the relay UE. Accordingly, the relay UE receives the RRC reconfiguration message from the target network device. For example, the RRC reconfiguration message is referred to as an RRC reconfiguration message 1.

The RRC reconfiguration message includes, for example, configuration information, and the RRC reconfiguration message implements, for example, the function of the first message in the embodiment shown in FIG. 3. Alternatively, the RRC reconfiguration message is, for example, for querying whether the relay UE can provide a relay service, and the RRC reconfiguration message implements, for example, the function of the first message in the embodiment shown in FIG. 4.

S808: The relay UE sends a second message to the target network device. Accordingly, the target network device receives the second message from the relay UE. If the RRC reconfiguration message in S807 implements the function of the first message in the embodiment shown in FIG. 3, the second message in S808 may implement the function of the second message in the embodiment shown in FIG. 3. Alternatively, if the RRC reconfiguration message in S807 implements the function of the first message in the embodiment shown in FIG. 4, the second message in S808 may implement the function of the second message in the embodiment shown in FIG. 4. S808 may be an optional step. Sending is not performed, the relay UE determines that reconfiguration fails, and the relay UE is triggered to enter an RRC connection reestablishment procedure.

In this embodiment of this application, for example, the second message indicates that configuration fails, or indicates that the relay UE refuses to provide the relay service. For more content, refer to S306 or S307 in the embodiment shown in FIG. 3 or S406 or S407 in the embodiment shown in FIG. 4.

S809: The target network device sends a handover request acknowledgement (handover request acknowledgement) message to the source network device. Accordingly, the source network device receives the handover request acknowledgement message from the target network device.

The handover request acknowledgement message may indicate that the remote UE is allowed to be handed over to the target network device, or indicate that the remote UE is not allowed to be handed over to the target network device. In this embodiment of this application, because the second message indicates that the configuration fails, or indicates that the relay UE refuses to provide the relay service, the handover request acknowledgement message may indicate that the remote UE is not allowed to be handed over to the target network device.

S807 is after S806, and S810 is after S809. However, a sequence of S807 and S809 is not limited. For example, the target network device may perform S809 after configuring the relay UE, or may first perform S809 and then query or configure the relay UE. If the target network device and the source network device are a same network device, S806 and S809 do not need to be performed.

S810: The source network device sends an RRC reconfiguration message to the remote UE. Accordingly, the remote UE receives the RRC reconfiguration message from the source network device. For example, the RRC reconfiguration message is referred to as an RRC reconfiguration message 2.

The RRC reconfiguration message may include configuration information, and the configuration information may be for configuring the remote UE to switch to an indirect path and communicate with the target network device via the relay UE. For example, the configuration information may include configuration information of a Uu interface, the configuration information of the Uu interface may include information about a Uu configuration of the relay UE, and the configuration information may further include a user ID (where for example, the ID is a cell radio network temporary identifier (cell radio network temporary identifier, C-RNTI)) for access of the relay UE, or may further include a random access resource configuration and a contention-free preamble (preamble) configuration that are for the relay UE to access the network device. For another example, the configuration information may include configuration information of the remote UE, and the configuration information of the remote UE may include a user ID (for example, a C-RNTI) of the remote UE, or may include configuration information of a PC5 of the remote UE. For example, the configuration information of the PC5 of the remote UE includes one or more of the following: configuration information of PC5 radio link control (radio link control, RLC), a logical channel identifier (logical channel ID, LCID) corresponding to a PC5 RLC entity, or an association relationship between the LCID corresponding to the PC5 RLC entity and a data radio bearer (data radio bearer, DRB) ID. For another example, the configuration information may include related information of a timer, and the timer may be used by the remote UE to determine whether the path switch fails. The timer is, for example, a timer T304, or may be another newly introduced timer. This is not limited herein. The source network device may choose, depending on whether the remote UE is to perform the path switch or a common switch, to configure different timers. For example, if the remote UE is to perform the path switch, the new timer may be configured for the remote UE. If the remote UE is to perform the common switch, the timer T304 may be configured for the remote UE. Alternatively, the source network device may configure the timer T304 for the remote UE by using a common RRC reconfiguration message without using an RRC reconfiguration with sync (RRC reconfiguration with sync) message. The source network device may add a new information element, for example, a fourth information element, to the RRC reconfiguration message, to indicate that the remote UE needs to switch to the indirect path (namely, a path for communicating with a network via a relay), and the fourth information element may include the configured timer. An ID of the remote UE may also be included in the fourth information element. This is not limited herein. The related information of the timer included in the configuration information may include duration of the timer, include duration and offset duration that are of the timer, or include offset duration. The offset duration may be determined based on a status of the relay UE. For example, in three cases in which the relay UE is in an RRC idle state, an RRC inactive state, and an RRC connected state, the offset duration may be set differently. For example, when the relay UE is in the RRC connected state, the offset duration may be set to be short, or even 0. If the remote UE performs the path switch to access the network via the relay UE in the RRC connected state, the relay UE in the RRC connected state does not need to perform a random access process of Uu. If the remote UE performs the path switch to access the network via the relay UE in the RRC idle state or the RRC inactive state, the relay UE in the RRC idle state or the RRC inactive state needs to perform a random access process of the Uu interface. Therefore, when the remote UE performs different path switch, duration for establishing a connection between the remote UE and the network device may also be different. For example, a manner in which the remote UE determines duration of the timer configured to determine whether the path switch fails is as follows: The duration that is of the timer and that is received by the remote UE is X. If the relay UE is in the RRC idle state, the offset duration is Y, where Y is greater than 0. If the relay UE is in the RRC connected state, the offset duration is 0. When the remote UE switches to access the network via the relay UE, if the relay UE is in the RRC idle state, the duration of the timer used by the remote UE to determine whether the path switch fails is set to X+Y If the relay UE is in the RRC connected state, the duration of the timer used by the remote UE to determine whether the path switch fails is set to X+0. In other words, the offset duration may be determined based on the status of the relay UE, to effectively reduce duration that the remote UE needs to wait when the switch to the relay UE in the RRC connected state fails, so that the remote UE enters a status recovery process as soon as possible.

S811: The remote UE performs the path switch based on the configuration information. For example, the remote UE performs configuration based on the configuration information, and the remote UE requests a connection to the relay UE. If establishment of the connection between the remote UE and the relay UE succeeds, the remote UE successfully switches to communicate with the network via the relay UE. When a first condition is satisfied and the establishment of the connection between the remote UE and the relay UE succeeds, the remote UE may determine that the path switch succeeds. If a first condition is not satisfied and the establishment of the connection between the remote UE and the relay UE fails, the remote UE determines that the path switch fails.

In this embodiment of this application, the first condition may be related to the timer. Refer to the following descriptions.

S812: The remote UE starts the timer.

For example, the remote UE may start the timer after S810 is performed, or in other words, after the remote UE receives the configuration information (where the configuration information is included in, for example, an RRC reconfiguration message that does not carry a reconfiguration with sync information element, an RRC reconfiguration message that carries the fourth information element, or an RRC reconfiguration message that carries a reconfiguration with sync information element) from the source network device. The timer may be the timer T304, or may be another newly introduced timer. This is not limited herein. The timing duration and/or the offset duration that are/is of the timer may be configured by using the RRC reconfiguration message in S810, may be configured by using a broadcast message, or may be configured by the relay UE. The remote UE may determine the timing duration of the timer based on the configured timing duration and/or offset duration that are/is of the timer. For example, the remote UE directly determines the timing duration of the timer based on the RRC reconfiguration message. For another example, the remote UE determines the timing duration of the timer based on the broadcast message. For another example, the remote UE determines the timing duration of the timer based on the timing duration configured by using the broadcast message and the offset duration configured by using the RRC reconfiguration message. For example, the timing duration of the timer is a sum of the timing duration configured by using the broadcast message and the offset duration configured by using the RRC reconfiguration message. For still another example, the remote UE determines the timing duration of the timer based on the timing duration configured by using the RRC reconfiguration message or the broadcast message and the offset duration configured by using a PC5 RRC message received from the relay UE. For example, the timing duration of the timer is a sum of the timing duration configured by using the RRC reconfiguration message or the broadcast message and the offset duration configured by using the PC5 RRC message. Because the offset duration is set based on the status of the relay UE, this can more properly help the remote UE determine needed waiting time to determine whether the path switch fails.

S813: The remote UE requests the establishment of the connection to the relay UE. For example, the remote UE sends a connection establishment request to the relay UE. After the relay UE receives the connection establishment request, if the relay UE replies to the remote UE with a connection establishment response message, and the connection establishment response message indicates that the connection establishment is allowed, the establishment of the connection between the remote UE and the relay UE succeeds. After the relay UE receives the connection establishment request, if the relay UE replies to the remote UE with a connection establishment response message, and the connection establishment response message indicates that the connection establishment is not allowed, or the relay UE replies with no connection establishment response message, the establishment of the connection between the remote UE and the relay UE fails.

The timer related to the first condition, namely, the timer started in S812, may be stopped when some conditions are satisfied. For example, the timer may be stopped when any one of a first stop condition, a second stop condition, a third stop condition, or a fourth stop condition is satisfied. The following briefly describes these stop conditions.

For example, the first stop condition is as follows: Establishment of a PC5 RRC connection between the remote UE and the relay UE succeeds. In this case, the timer may be stopped. For example, if the remote UE receives the connection establishment response message that the relay UE replies with, and the connection establishment response message indicates that the connection establishment is allowed, the remote UE may stop the timer.

If the establishment of the connection between the remote UE and the relay UE succeeds before the timer expires, the remote UE determines that the path switch succeeds. If the connection between the remote UE and the relay UE has not been established when the timer expires, the remote UE determines that the path switch fails. In this embodiment of this application, whether the path switch succeeds is determined by using the timer. This manner is simple and easy to implement. The timing duration of the timer may be determined by the remote UE. Alternatively, refer to the descriptions of S810 and S812. For example, the remote UE may determine, based on historical information, time for establishing a connection to the other UE, and determine the time as the timing duration of the timer. Alternatively, the timing duration of the timer may be configured and notified to the remote UE by the network device. Alternatively, the timing duration of the timer may be specified in a protocol.

If the establishment of the connection between the remote UE and the relay UE succeeds before the timer expires, the remote UE may perform normal communication via the relay UE, and no subsequent step needs to be performed. However, if the connection between the remote UE and the relay UE has not been established when the timer expires, subsequent steps may be proceeded to.

For example, the second stop condition is as follows: An RRC layer of the remote UE sends an RRC reconfiguration complete (RRC reconfiguration complete) message to a lower layer of the remote UE, and the RRC layer receives an acknowledgement feedback from the lower layer. The lower layer herein is, for example, a packet data convergence protocol (packet data convergence protocol, PDCP) layer, a radio link control (radio link control, RLC) layer, or a media access control (media access control, MAC) layer. If the timer of the remote UE expires, the remote UE determines that the path switch fails. In this embodiment of this application, whether the path switch succeeds is determined by using the timer. This manner is simple and easy to implement. A setting manner of the timer is similar to the setting manner in the first stop condition. Details are not described herein again. If the timer of the remote UE expires, subsequent steps may be proceeded to.

For example, the third stop condition is as follows: The remote UE receives an acknowledgement indication from the relay UE, and the acknowledgement indication is, for example, sent by the source network device via the relay UE. If the timer of the remote UE expires, the remote UE determines that the path switch fails. In this embodiment of this application, whether the path switch succeeds is determined by using the timer. This manner is simple and easy to implement. A setting manner of the timer is similar to the setting manner in the first stop condition. Details are not described herein again. If the timer of the remote UE expires, subsequent steps may be proceeded to.

For example, the fourth stop condition is as follows: The remote UE receives indication information from the relay UE, where the indication information is, for example, carried by using the PC5 RRC message, and the indication information indicates the remote UE to stop the timer, or indicates that the relay UE has successfully accessed the network device.

The relay UE may determine, based on the status of the relay UE, when to send the indication information to the remote UE. For example, if the relay UE is in the RRC connected state, the relay UE may send the indication information to the remote UE when the connection to the remote UE is successfully established or after the connection is successfully established. If the relay UE is in the RRC idle state or the RRC inactive (inactive) state, the relay UE may send the indication information to the remote UE when random access is completed; the relay UE may send the indication information to the remote UE when determining that an RRC connection is successfully established or that an RRC connection is successfully resumed (for example, after successfully receiving an RRC setup (RRC setup) message, RRC establishment (RRC establishment) or an RRC resume (RRC resume) message); or the relay UE may send the indication information to the remote UE when determining that an RRC connection is successfully established or an RRC connection is successfully resumed (for example, after the relay UE stops a timer T300 or a timer T319). If the timer of the remote UE expires, the remote UE determines that the path switch fails. In this embodiment of this application, whether the path switch succeeds is determined by using the timer. This manner is simple and easy to implement. A setting manner of the timer is similar to the setting manner in the first stop condition. Details are not described herein again. If the timer of the remote UE expires, subsequent steps may be proceeded to.

S814: The remote UE sends failure information to the source network device through a first path. Accordingly, the source network device receives the failure information from the remote UE through the first path. The failure information may indicate that the path switch fails.

The first path is a communication path between the remote UE and the source network device before the remote UE performs the path switch. If this embodiment of this application is applied to the scenario of switching between the indirect links, the first path is a communication path through which the remote UE is connected to the source network device via the relay UE. That is, the first path is: the remote UE-the relay UE-the source network device. In this case, the relay UE is relay UE connected to the remote UE before the remote UE performs the path switch. However, if this embodiment of this application is applied to a scenario of switching from the direct link to the indirect link, the first path is a communication path through which the remote UE is directly connected to the source network device. That is, the first path is: the remote UE-the source network device.

For more content of S814, refer to S712 in the embodiment shown in FIG. 7.

S815: The remote UE sends an RRC connection reestablishment request message to the source network device through a first path. Accordingly, the source network device receives the RRC connection reestablishment request message from the remote UE. Alternatively, after performing relay reselection, the remote UE may select another relay UE, and initiate RRC connection reestablishment by using the another relay UE.

S814 and S815 are parallel steps, and only either of S814 and S815 needs to be performed. If the remote UE has not broken the connection to the source network device through the first path before successfully performing the path switch, the remote UE may alternatively perform S815 to reestablish an RRC connection within coverage of the source network device, thereby communicating with the source network device through the new connection.

S816: The remote UE performs cell reselection.

The remote UE may enter the RRC idle (idle) state, and perform cell reselection in the RRC idle state. For example, a cell reselected by the remote UE is referred to as a first cell.

S817: The remote UE initiates an RRC connection reestablishment (RRC connection reestablishment) process in the first cell, or initiates an RRC connection establishment (RRC connection establishment) process in the first cell.

The three solutions S814, S815, and S816 and S817 are parallel, and only one of the three solutions needs to be performed.

For more content of S817, refer to S715 in the embodiment shown in FIG. 7.

In this embodiment of this application, the remote UE may determine, based on the timer, whether the path switch succeeds or fails. A determining manner is simple and easy to implement. Even for UE with a low capability, the technical solution in this embodiment of this application can also be applied. In addition, if the path switch fails, the remote UE may perform a corresponding operation, for example, continue to perform communication within the coverage of the source network device, or may enter a new cell through cell reselection, to resume a service of the remote UE as soon as possible, and improve service continuity.

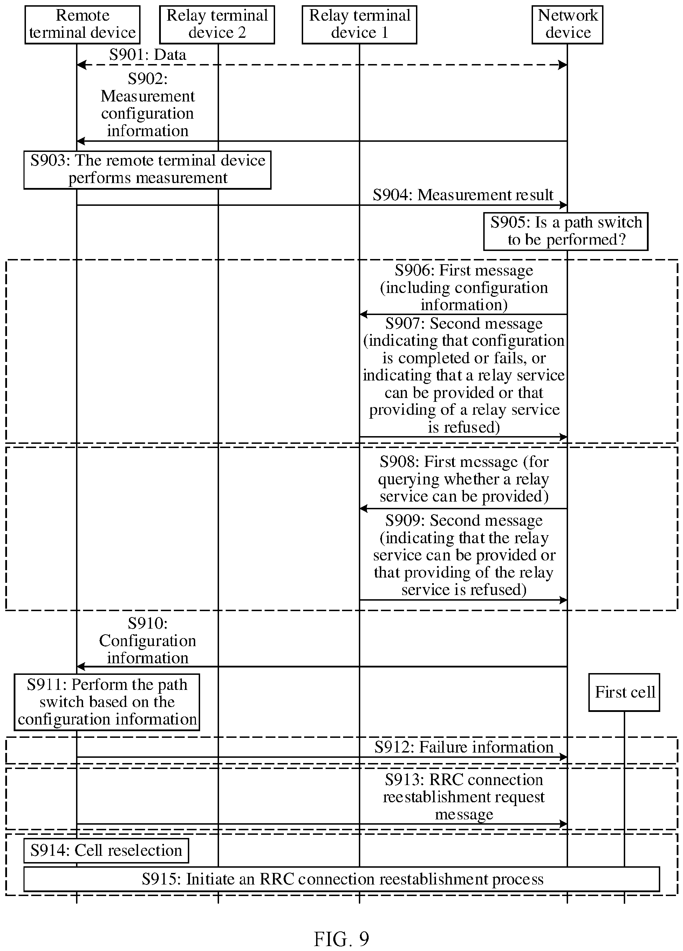

An embodiment of this application provides a seventh communication method. According to the method, remote UE can also determine a case in which a path switch fails, so that work of the remote UE can continue. FIG. 9 is a flowchart of the method. The method may relate to a process of switching between indirect links, or may relate to a process of switching from a direct link to an indirect link. In the following description process, an example in which the method is applied to the network architecture shown in any one of FIG. 1A to FIG. 1D is used. For devices in FIG. 1A to FIG. 1D that relay UE, the remote UE, and a network device in this embodiment of this application are, refer to the descriptions of the sixth communication method. A relay terminal device 1 and a relay terminal device 2 in FIG. 9 merely indicate that there may be a plurality of UEs that can serve as relay UEs, and the remote UE may measure the plurality of UEs when performing measurement.

In this embodiment of this application, an example in which a source network device and a target network device are a same network device is used. In addition, in the following descriptions, an example in which a second terminal device is the remote UE and a first terminal device is the relay UE is used.

S901: The remote UE performs data transmission with the network device.

S902: The network device sends an RRC message to the remote UE. Accordingly, the remote UE receives the RRC message from the network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S903: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 9, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S904: The remote UE sends a first result to the network device. Accordingly, the network device receives the first result from the remote UE. The first result is, for example, the measurement result or a selection result. In FIG. 9, an example in which the first result is the measurement result is used.

The measurement result is, for example, a measurement report obtained by measuring at least one UE by the remote UE. The selection result is a result of selecting the relay UE by the remote UE, for example, includes an ID of the selected relay UE. Optionally, measurement information of the remote UE and the like may further be included.

If an application scenario of this embodiment of this application is switching between the indirect links, communication between the remote UE and the network device in S901 to S904 is all performed through forwarding via relay UE, namely, the relay terminal device 2 in FIG. 9, connected to the remote UE before the link switch, and relay UE in the following descriptions is relay UE, namely, the relay terminal device 1 in FIG. 9, connected to the remote UE after the link switch.

S905: The network device determines, based on the measurement result or the selection result, whether the remote UE is to perform the path switch. If the network device determines that the remote UE is to perform the path switch, subsequent steps are performed; otherwise, no subsequent step is performed.

S906: The network device sends a first message to the relay UE. Accordingly, the relay UE receives the first message from the network device.

For more content of S906, refer to S306 in the embodiment shown in FIG. 3.

S907: The relay UE sends a second message to the network device. Accordingly, the network device receives the second message from the relay UE.

The second message may indicate that configuration of the relay UE is completed, or indicate that configuration of the relay UE fails. Alternatively, the second message may indicate that the relay UE can provide a relay service, or indicate that the relay UE refuses to provide a relay service. For example, in this embodiment of this application, the second message indicates that the configuration of the relay UE fails, or indicates that the relay UE refuses to provide the relay service.

For more content of S907, refer to S307 in the embodiment shown in FIG. 3.

S908: The network device sends a first message to the relay UE. Accordingly, the relay UE receives the first message from the network device. The first message may be for querying whether the relay UE can provide a relay service.

For more content of S908, refer to S406 in the embodiment shown in FIG. 4.

S909: The relay UE sends a second message to the network device. Accordingly, the network device receives the second message from the relay UE.

The second message may indicate that configuration of the relay UE is completed, or indicate that configuration of the relay UE fails. Alternatively, the second message may indicate that the relay UE can provide the relay service, or indicate that the relay UE refuses to provide the relay service. For example, in this embodiment of this application, the second message indicates that the configuration of the relay UE fails, or indicates that the relay UE refuses to provide the relay service.

For more content of S909, refer to S407 in the embodiment shown in FIG. 4.

A process S906 and S907 is parallel to a process S908 and S909, and only either process needs to be performed.

Alternatively, S906 to S909 may not be performed. Instead, the network device normally sends an RRC reconfiguration message to the relay UE in an existing manner, where the RRC reconfiguration message includes configuration information. After receiving the RRC reconfiguration message, the relay UE may perform configuration. If the configuration succeeds, the relay UE may send an RRC reconfiguration complete message to the network device. If the configuration fails or the relay UE refuses to provide a relay service, the relay UE may enter an RRC reestablishment process.

S910: The network device sends an RRC reconfiguration message to the remote UE. Accordingly, the remote UE receives the RRC reconfiguration message from the network device.

The RRC reconfiguration message may include configuration information. The configuration information may be for configuring the remote UE to switch to communicate with the target network device via the relay UE. For example, the configuration information may include configuration information of a Uu interface.

S911: The remote UE performs the path switch based on the configuration information. For example, the remote UE performs configuration based on the configuration information, and the remote UE requests a connection to the relay UE. If establishment of the connection between the remote UE and the relay UE succeeds, the remote UE successfully switches to communicate with a network via the relay UE.

When a first condition is satisfied, the remote UE may determine that the path switch succeeds. If a first condition is not satisfied, the remote UE determines that the path switch fails.

In this embodiment of this application, that the first condition is not satisfied may be that establishment of a direct communication connection fails. For example, a condition 1, a condition 2, or a condition 3 is included.

Condition 1: When a quantity of times of sending a connection establishment request message to the relay UE is less than or equal to M, a feedback from the relay UE is received, where M is a maximum quantity of times of retransmission. A prerequisite for using the condition 1 is that the relay UE does not reply to the remote UE with a connection establishment response message if the relay UE does not accept the establishment of the connection to the remote UE.

The remote UE may send the connection establishment request message to the relay UE by using a retransmission mechanism. That is, if the connection establishment request message fails to be sent once, the connection establishment request message may further be retransmitted. However, a quantity of times of the retransmission is limited, and M is the maximum quantity of times of the retransmission. If the remote UE still does not receive the feedback from the relay UE after sending the connection establishment request message to the relay UE M times, it indicates that the connection establishment fails. Therefore, if the feedback from the relay UE is received when the quantity of times of sending the connection establishment request message to the relay UE is less than or equal to M, it indicates that the connection establishment succeeds. If the feedback from the relay UE is still not received when the quantity of times of sending the connection establishment request message to the relay UE is greater than or equal to M, it indicates that the connection establishment fails. If the connection establishment fails, the remote UE cannot perform communication via the relay UE, and the path switch fails. Therefore, the condition 1 may be for determining whether the path switch succeeds.

Condition 2: Security verification on the relay UE succeeds.

After the remote UE sends a connection establishment request message to the relay UE, if the relay UE agrees to establish the connection, the relay UE sends security-related parameters to the remote UE, and the remote UE needs to perform configuration based on the security-related parameters. However, the configuration of the remote UE may fail. For example, if some parameters (for example, an integrity protection algorithm) sent by the relay UE cannot be supported by the remote UE, the configuration of the remote UE may fail. If the remote UE fails to perform configuration based on the security parameters, it is considered that the security verification on the relay UE fails. If the remote UE succeeds in performing configuration based on the security parameters, it is considered that the security verification on the relay UE succeeds. If the security verification on the relay UE succeeds, the remote UE may perform communication via the relay UE, and the path switch succeeds. If the security verification on the relay UE fails, the remote UE cannot perform communication via the relay UE, and the path switch fails. Therefore, the condition 2 may be for determining whether the path switch succeeds.

Condition 3: A connection establishment request message is sent to the relay UE, and a connection establishment response message from the relay UE is received, where the connection establishment response message may indicate that the connection establishment is accepted (or allowed). A prerequisite for using the condition 3 is that the relay UE replies to the remote UE with the connection establishment response message regardless of whether the relay UE accepts the establishment of the connection to the remote UE.

The remote UE sends the connection establishment request message to the relay UE. If the relay UE replies with the connection establishment response message and the connection establishment response message indicates that connection establishment is accepted, the remote UE may perform communication via the relay UE, and the path switch succeeds. However, if the connection establishment response message indicates that the connection establishment is not accepted, the remote UE cannot perform communication via the relay UE, and the path switch fails. Therefore, condition 3 may also be for determining whether the path switch succeeds.

Which of the foregoing three conditions is used by the remote UE to determine whether the path switch succeeds may be determined by the remote UE, may be configured by the network device, or may be specified in a protocol. By using the foregoing conditions, the remote UE can flexibly and quickly determine whether the path switch succeeds. If the path switch fails, compared with a solution in which whether the path switch succeeds is determined by using a timer, the solution can enable the remote UE to quickly enter a link resumption step, to reduce or avoid communication interruption, and improve service continuity.

Alternatively, in this embodiment of this application, the remote UE may not use the foregoing conditions, but determine, by using a timer, whether the path switch succeeds. For a manner of performing determining by using the timer, refer to the descriptions of the embodiment shown in FIG. 8.

In addition, optionally, in the embodiment shown in FIG. 8, the remote UE may alternatively not determine, by using the timer, whether the path switch succeeds, but determine, by using one of the foregoing three conditions, whether the path switch succeeds. For a determining manner, refer to the descriptions in this embodiment of this application.

If the remote UE determines that the path switch fails, the remote UE may perform normal communication via the relay UE, and no subsequent step needs to be performed. If the remote UE determines that the path switch fails, the remote UE may proceed to the following steps.

S912: The remote UE sends failure information to the network device through a first path. Accordingly, the network device receives the failure information from the remote UE through the first path. The failure information may indicate that the path switch fails.

The first path is a communication path between the remote UE and the network device before the remote UE performs the path switch. If this embodiment of this application is applied to the scenario of switching between the indirect links, the first path is a communication path through which the remote UE is connected to the network device via relay UE. That is, the first path is: the remote UE-the relay UE-the network device. In this case, the relay UE is the relay UE connected to the remote UE before the remote UE performs the path switch. However, if this embodiment of this application is applied to a scenario of switching from the direct link to the indirect link, the first path is a communication path through which the remote UE is directly connected to the network device. That is, the first path is: the remote UE-the network device.

For more content of S912, refer to S712 in the embodiment shown in FIG. 7.

S913: The remote UE sends an RRC connection reestablishment request message to the source network device through a first path. Accordingly, the source network device receives the RRC connection reestablishment request message from the remote UE.

S912 and S913 are parallel steps, and only either of S912 and S913 needs to be performed. If the remote UE has not broken the connection to the source network device through the first path before successfully performing the path switch, the remote UE may alternatively perform S912 to reestablish an RRC connection within coverage of the source network device, thereby communicating with the source network device through the new connection.

S914: The remote UE performs cell reselection.

The remote UE may enter an RRC idle (idle) state, and perform cell reselection in the RRC idle state. For example, a cell reselected by the remote UE is referred to as a first cell.

S915: The remote UE initiates an RRC connection reestablishment (RRC connection reestablishment) process in the first cell, or initiates an RRC connection establishment (RRC connection establishment) process in the first cell.

The three solutions S912, S913, and S914 and S915 are parallel, and only one of the three solutions needs to be performed.

For more content of S915, refer to S715 in the embodiment shown in FIG. 7.

In this embodiment of this application, the remote UE may determine, based on different conditions, whether the path switch succeeds or fails. Compared with a manner of determining, by using the timer, whether the path switch succeeds, performing determining by using the foregoing conditions can reduce time needed in a determining process, and improve determining efficiency, so that the remote UE can more quickly learn whether the path switch succeeds, to more quickly take a corresponding measure, and reduce service interruption time. In addition, if the path switch fails, the remote UE may perform a corresponding operation, for example, continue to perform communication within the coverage of the source network device, or may enter a new cell through cell reselection, to resume a service of the remote UE as soon as possible, and improve the service continuity.

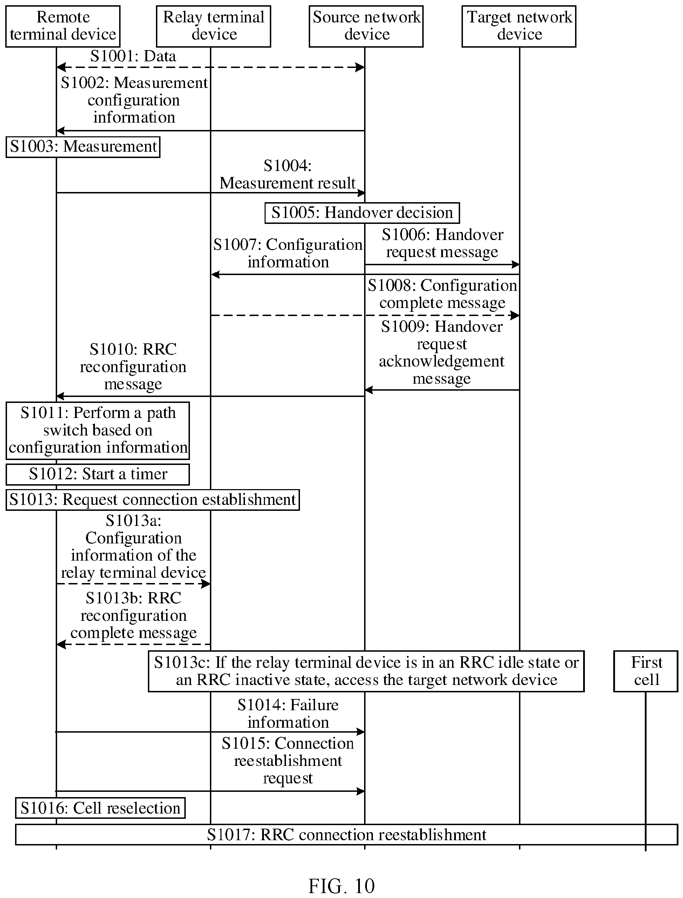

Next, an embodiment of this application provides an eighth communication method. According to the method, remote UE can also determine a case in which a path switch fails, so that work of the remote UE can continue. FIG. 10 is a flowchart of the method. The method may relate to a process of switching between indirect links, or may relate to a process of switching from a direct link to an indirect link. In the following description process, an example in which the method is applied to the network architecture shown in any one of FIG. 1A to FIG. 1D is used.

If the technical solution provided in this embodiment of this application is applied to the network architecture shown in FIG. 1A, it indicates that a source network device before the remote UE performs the path switch and a target network device after the remote UE performs the path switch are a same network device. In this case, a first terminal device in the following descriptions may be a relay terminal device in FIG. 1A, a second terminal device in the following descriptions may be a remote terminal device in FIG. 1A, and a network device in the following descriptions may be an access network device in FIG. 1A, where the network device is both the source network device and the target network device. If the technical solution provided in this embodiment of this application is applied to the network architecture shown in FIG. 1B, it indicates that a source network device before the remote UE performs the path switch and a target network device after the remote UE performs the path switch are a same network device. In this case, a first terminal device in the following descriptions may be the relay terminal device 1 or the relay terminal device 2 in FIG. 1B, a second terminal device in the following descriptions may be the remote terminal device in FIG. 1B, and a network device in the following descriptions may be the access network device in FIG. 1B, where the network device is both the source network device and the target network device. If the technical solution provided in this embodiment of this application is applied to the network architecture shown in FIG. 1C, it indicates that the source network device before the remote UE performs the path switch and the target network device after the remote UE performs the path switch are different network devices. In this case, a first terminal device in the following descriptions may be the relay terminal device in FIG. 1C, a second terminal device in the following descriptions may be the remote terminal device in FIG. 1C, and a network device (which is also referred to as a first network device, where the first network device is the source network device) in the following descriptions may be the access network device in FIG. 1C. In addition, the following further relates to the target network device, which may be referred to as a second network device, and may be the access network device 2 in FIG. 1C. Alternatively, the source network device may be the access network device 2 in FIG. 1C, and the target network device may be the access network device 1 in FIG. 1C. If the technical solution provided in this embodiment of this application is applied to the network architecture shown in FIG. 1D, it indicates that a source network device before the remote UE performs the path switch and a target network device after the remote UE performs the path switch are different network devices. In this case, a first terminal device in the following descriptions may be the relay terminal device 1 in FIG. 1D, a second terminal device in the following descriptions may be the remote terminal device in FIG. 1D, and a network device (which is also referred to as a first network device, where the first network device is the source network device) in the following descriptions may be the access network device 1 in FIG. 1D. In addition, the following further relates to the target network device, which may be referred to as a second network device, and may be the access network device 2 in FIG. 1D. Alternatively, the first terminal device may be the relay terminal device 2 in FIG. 1D, the source network device may be the access network device 2 in FIG. 1D, and the target network device may be the access network device 1 in FIG. 1D.

In the following descriptions, an example in which the second terminal device is the remote UE and the first terminal device is relay UE is used. In addition, in this embodiment of this application, an example in which the source network device and the target network device are the different network devices is used.

S1001: The remote UE performs data transmission with the source network device.

S1002: The source network device sends an RRC message to the remote UE. Accordingly, the remote UE receives the RRC message from the source network device. The RRC message includes, for example, measurement configuration information, and the measurement configuration information is used by the remote UE to measure other UE.

Alternatively, the network device may send broadcast information to the remote UE. Accordingly, the remote UE receives the broadcast information from the network device. The broadcast information is, for example, included in a system message, or included in another broadcast message. The broadcast information may include related information used by the remote UE to select the relay UE, for example, may include measurement configuration information for configuring measurement performed by the remote UE to select the relay UE.

S1003: The remote UE measures or selects the other UE. For example, the remote UE may send a discovery message, to trigger the other UE to send a discovery message, so that the remote UE may measure the discovery message from the other UE, to complete measurement or selection of the other UE. In FIG. 10, an example in which the remote UE measures the other UE is used.

The remote UE may measure the other UE by measuring the discovery message from the other UE, or may measure other information from the other UE, for example, measure a data signal from the other UE. This is not limited herein. The remote UE may select the other UE based on a measurement result.

S1004: The remote UE sends a first result to the network device. Accordingly, the network device receives the first result from the remote UE. The first result is, for example, the measurement result or a selection result. In FIG. 10, an example in which the first result is the measurement result is used.

The measurement result includes, for example, a report of measuring at least one UE by the remote UE. The selection result is a result of selecting the relay UE by the remote UE, for example, includes an ID of the selected relay UE. Optionally, measurement information of the remote UE and the like may further be included.

If an application scenario of this embodiment of this application is switching from the direct link to the indirect link, the measurement result may further include a result of measuring a serving cell, namely, a result of measuring the network device. If an application scenario of this embodiment of this application is switching between the indirect links, communication between the remote UE and the network device in S1001 to S1004 is all performed through forwarding via relay UE connected to the remote UE before the link switch, and relay UE in the following descriptions is relay UE connected to the remote UE after the link switch. The first result may further include a result of measuring the relay UE connected to the remote UE before the link switch.

S1005: The source network device makes a handover decision. The source network device determines, based on the measurement result, whether the remote UE can perform the path switch. In this embodiment of this application, the source network device determines, based on the measurement result, whether the remote UE can be handed over from the relay UE to the target network device. If the source network device determines that the remote UE can be handed over from the relay UE to the target network device, S1006 is performed.

S1006: The source network device sends a handover request message to the target network device. Accordingly, the target network device receives the handover request message from the source network device. The handover request message may indicate that the remote UE is to be handed over to the target network device. The target network device serves the relay UE. Because the remote UE is to switch to perform communication via the relay UE, the source network device is to request the handover from the target network device serving the relay UE.

S1007: The target network device sends an RRC reconfiguration message to the relay UE. Accordingly, the relay UE receives the RRC reconfiguration message from the target network device. For example, the RRC reconfiguration message is referred to as an RRC reconfiguration message 1.

The RRC reconfiguration message includes, for example, configuration information, and the RRC reconfiguration message implements, for example, the function of the first message in the embodiment shown in FIG. 3. Alternatively, the RRC reconfiguration message is, for example, for querying whether the relay UE can provide a relay service, and the RRC reconfiguration message implements, for example, the function of the first message in the embodiment shown in FIG. 4. Alternatively, after configuration is performed by using the RRC reconfiguration message, if the relay UE cannot configure a related configuration, the relay UE triggers a reconfiguration failure, and consequently the relay UE enters an RRC connection reestablishment procedure.

S1008: The relay UE sends a second message to the target network device. Accordingly, the target network device receives the second message from the relay UE. If the RRC reconfiguration message in S1007 implements the function of the first message in the embodiment shown in FIG. 3, the second message in S1008 may implement the function of the second message in the embodiment shown in FIG. 3. Alternatively, if the RRC reconfiguration message in S1007 implements the function of the first message in the embodiment shown in FIG. 4, the second message in S1008 may implement the function of the second message in the embodiment shown in FIG. 4.

In this embodiment of this application, for example, the second message indicates that configuration fails, or indicates that the relay UE refuses to provide the relay service. For more content, refer to S306 or S307 in the embodiment shown in FIG. 3 or S406 or S407 in the embodiment shown in FIG. 4. If the configuration performed by using the configuration message in S1007 fails, S1008 may be an optional step. Sending is not performed, the relay UE determines that reconfiguration fails, and the relay UE is triggered to enter the RRC connection reestablishment procedure.

S1009: The target network device sends a handover request acknowledgement message to the source network device. Accordingly, the source network device receives the handover request acknowledgement message from the target network device.

The handover request acknowledgement message may indicate that the remote UE is allowed to be handed over to the target network device, or indicate that the remote UE is not allowed to be handed over to the target network device. In this embodiment of this application, because the second message indicates that the configuration fails, or indicates that the relay UE refuses to provide the relay service, the handover request acknowledgement message may indicate that the remote UE is not allowed to be handed over to the target network device.

S1007 is after S1006, and S1010 is after S1009. However, a sequence of S1007 and S1009 is not limited. For example, the target network device may perform S 1009 after configuring the relay UE, or may first perform S1009 and then query or configure the relay UE. If the target network device and the source network device are a same network device, S1006 and S1009 do not need to be performed.

S1010: The source network device sends an RRC reconfiguration message to the remote UE. Accordingly, the remote UE receives the RRC reconfiguration message from the source network device. For example, the RRC reconfiguration message is referred to as an RRC reconfiguration message 2.

The RRC reconfiguration message may include configuration information, and the configuration information may be for configuring the remote UE to switch to an indirect path and communicate with the target network device via the relay UE. For more content of S1010, for example, an implementation of the configuration information, refer to S810 in the embodiment shown in FIG. 8.

S1011: The remote UE performs the path switch based on the configuration information. For example, the remote UE performs configuration based on the configuration information, and the remote UE requests a connection to the relay UE. If a second condition is satisfied, it may be determined that the remote UE fails in the path switch.

In this embodiment of this application, the second condition may be related to a timer and a received indication. For example, if a configured timer expires, establishment of the connection between the remote UE and the relay UE fails before the timer expires, or an RLF indication sent by the relay UE is received before the timer expires, the remote UE determines that the path switch fails. For details, refer to the following descriptions.

S1012: The remote UE starts the timer.

For example, the remote UE may start the timer after S1010 is performed, or in other words, after the remote UE receives the configuration information (where the configuration information may be included in a common RRC reconfiguration message) from the source network device. The timer is, for example, a timer T304, or may be another newly introduced timer. This is not limited herein. For content such as a configuration manner of a parameter such as timing duration of the timer, refer to S812 in the embodiment shown in FIG. 8. In addition, the timer may be stopped in a specific scenario. For a specific stopping condition, refer to the following descriptions in S1013.

S1013: The remote UE requests the establishment of the connection to the relay UE. For example, the remote UE sends a connection establishment request to the relay UE. After the relay UE receives the connection establishment request, if the relay UE replies to the remote UE with a connection establishment response message, and the connection establishment response message indicates that the connection establishment is allowed, the establishment of the connection between the remote UE and the relay UE succeeds. After the relay UE receives the connection establishment request, if the relay UE replies to the remote UE with a connection establishment response message, and the connection establishment response message indicates that the connection establishment is not allowed, or the relay UE replies with no connection establishment response message, the establishment of the connection between the remote UE and the relay UE fails.

More specifically, when one or more of the following scenarios occur, it may be directly determined that the establishment of the connection between the remote UE and the relay UE fails. When it is determined that the connection establishment fails, it may be determined that the path switch fails. Optionally, the configured timer may be stopped. In other words, when one or more of the following scenarios occur, that the connection establishment fails can be determined without waiting for the timer, so that waiting time of the remote UE can be reduced. Optionally, if it is determined that the connection establishment fails, the remote UE may further be triggered to perform RRC reestablishment.

Scenario 1: When a quantity of times of sending a connection establishment request message to the relay UE reaches M, a feedback from the relay UE is still not received, where M is a maximum quantity of times of retransmission.

The remote UE may send the connection establishment request message to the relay UE by using a retransmission mechanism. That is, if the connection establishment request message fails to be sent once, the connection establishment request message may further be retransmitted. However, a quantity of times of the retransmission is limited, and M is the maximum quantity of times of the retransmission. If the remote UE still does not receive the feedback from the relay UE after sending the connection establishment request message to the relay UE M times, it indicates that the connection establishment fails. If the feedback from the relay UE is still not received when the quantity of times of sending the connection establishment request message to the relay UE is greater than or equal to M, it indicates that connection establishment fails. If the connection establishment fails, the remote UE cannot perform communication via the relay UE, and the path switch fails.

Scenario 2: Security verification performed by the remote UE on the relay UE fails.

After the remote UE sends a connection establishment request message to the relay UE, if the relay UE agrees to establish the connection, the relay UE sends security-related parameters to the remote UE, and the remote UE needs to perform configuration based on the security-related parameters. However, the configuration of the remote UE may fail. For example, if some parameters (for example, an integrity protection algorithm) sent by the relay UE cannot be supported by the remote UE, the configuration of the remote UE may fail. If the remote UE fails to perform configuration based on the security parameters, it is considered that the security verification on the relay UE fails. If the remote UE succeeds in performing configuration based on the security parameters, it is considered that the security verification on the relay UE succeeds. If the security verification on the relay UE fails, the remote UE cannot perform communication via the relay UE. This indicates that connection establishment fails, and the path switch fails.

Scenario 3: A connection establishment request message is sent to the relay UE, and a connection establishment response message from the relay UE is received, where the connection establishment response message may indicate that the connection establishment is refused.

The remote UE sends the connection establishment request message to the relay UE. If the relay UE replies with the connection establishment response message and the connection establishment response message indicates that connection establishment is accepted, the remote UE may perform communication via the relay UE. However, if the connection establishment response message indicates that the connection establishment is not accepted, the remote UE cannot perform communication via the relay UE. This indicates that the connection establishment fails, and the path switch fails.

In addition, the timer related to the second condition, namely, the timer started in S1012, may be stopped when some conditions are satisfied. For example, the timer may be stopped when any one of a first stop condition, a second stop condition, a third stop condition, a fourth stop condition, or a fifth stop condition is satisfied. For the first stop condition to the fourth stop condition, refer to the descriptions of S813 in the embodiment shown in FIG. 8. The following briefly describes the fifth stop condition.

For example, the fifth stop condition is as follows: The remote UE determines that the establishment of the connection to the relay UE fails, or determines a PC5 RLF between the remote UE and the relay UE, the remote UE receives a Uu RLF indication from the relay UE, or the remote UE receives an access failure indication from the relay UE. If the fifth stop condition is satisfied, the remote UE may stop the timer, and determine that the path switch fails. If the timer of the remote UE expires, the remote UE determines that the path switch fails. In this embodiment of this application, whether the path switch succeeds is determined by using the timer. This manner is simple and easy to implement. A setting manner of the timer is similar to the setting manner in the first stop condition. Details are not described herein again. The fifth stop condition includes a plurality of conditions. The conditions are introduced, to quickly determine, before the timer expires, whether the path switch fails, reduce the waiting time of the remote UE, and accelerate a service resumption speed of the remote UE.

After that the path switch fails is determined, subsequent steps may be proceeded to.

S1013a: If the configuration information in S1010 includes configuration information of the relay UE, the remote UE sends the configuration information to the relay UE. Accordingly, the relay UE receives the configuration information from the remote LTE. The configuration information sent by the remote UE to the relay UE may be the configuration information in S1010, or may be the configuration information of the relay UE included in the configuration information in S1010.

S1013b: If the establishment of the connection between the relay UE and the remote UE succeeds, the remote UE sends an RRC reconfiguration complete (RRC reconfiguration complete) message to the network device via the relay UE. Accordingly, the network device receives the RRC reconfiguration complete message from the relay UE.

A configuration sent by the remote UE to the relay UE is a default (default) PC5 RLC configuration. The PC5 RLC configuration may include a default LCID, a default parameter configuration, and the like. The default parameter configuration is used, so that the relay UE can normally receive the RRC reconfiguration complete message from the remote UE even in an RRC idle state or an RRC inactive state, to trigger entering of an RRC connected state. If establishment of a PC5 connection fails in S1013, S1013b may not be performed successfully.

S1013c: If the relay UE is in the RRC idle state or the RRC inactive state, access to the target network device is triggered after a first PC5 message from the remote UE is received.

S1014: The remote UE sends failure information to the source network device through a first path. Accordingly, the source network device receives the failure information from the remote UE through the first path. The failure information may indicate that the path switch fails.

The first path is a communication path between the remote UE and the source network device before the remote UE performs the path switch. If this embodiment of this application is applied to the scenario of switching between the indirect links, the first path is a communication path through which the remote UE is connected to the source network device via the relay UE. That is, the first path is: the remote UE-the relay UE-the source network device. In this case, the relay UE is relay UE connected to the remote UE before the remote UE performs the path switch. However, if this embodiment of this application is applied to the scenario of switching from the direct link to the indirect link, the first path is a communication path through which the remote UE is directly connected to the source network device. That is, the first path is: the remote UE-the source network device.

For more content of S1014, refer to S712 in the embodiment shown in FIG. 7.

S1015: The remote UE sends an RRC connection reestablishment request message to the source network device through a first path. Accordingly, the source network device receives the RRC connection reestablishment request message from the remote UE. Alternatively, after performing relay reselection, the remote UE selects another relay UE, and initiates connection reestablishment.

S1014 and S1015 are parallel steps, and only either of S1014 and S1015 needs to be performed. If the remote UE has not broken a connection to the source network device through the first path before successfully performing the path switch, the remote UE may alternatively perform S1015 to reestablish an RRC connection within coverage of the source network device, thereby communicating with the source network device through the new connection.

S1016: The remote UE performs cell reselection.

The remote UE may enter the RRC idle state, and perform cell reselection in the RRC idle state. For example, a cell reselected by the remote UE is referred to as a first cell.

S1017: The remote UE initiates the RRC connection reestablishment process in the first cell, or initiates an RRC connection establishment process in the first cell.

The three solutions S1014, S1015, and S1016 and S1017 are parallel, and only one of the three solutions needs to be performed.

For more content of S1017, refer to S715 in the embodiment shown in FIG. 7.

In this embodiment of this application, the remote UE may determine, based on the timer, whether the path switch succeeds or fails. A determining manner is simple and easy to implement. Even for UE with a low capability, the technical solution in this embodiment of this application can also be applied. In addition, if the path switch fails, the remote UE may perform a corresponding operation, for example, continue to perform communication within the coverage of the source network device, or may enter a new cell through cell reselection, to resume a service of the remote UE as soon as possible, and improve service continuity.

The following describes, with reference to accompanying drawings, apparatuses configured to implement the foregoing methods in embodiments of this application. Therefore, all of the foregoing content may be used in subsequent embodiments. Repeated content is not described again.

An embodiment of this application provides a communication apparatus. The communication apparatus may be a terminal device, or may be a circuit. The communication apparatus may be configured to perform the action performed by the terminal device in the foregoing method embodiments.

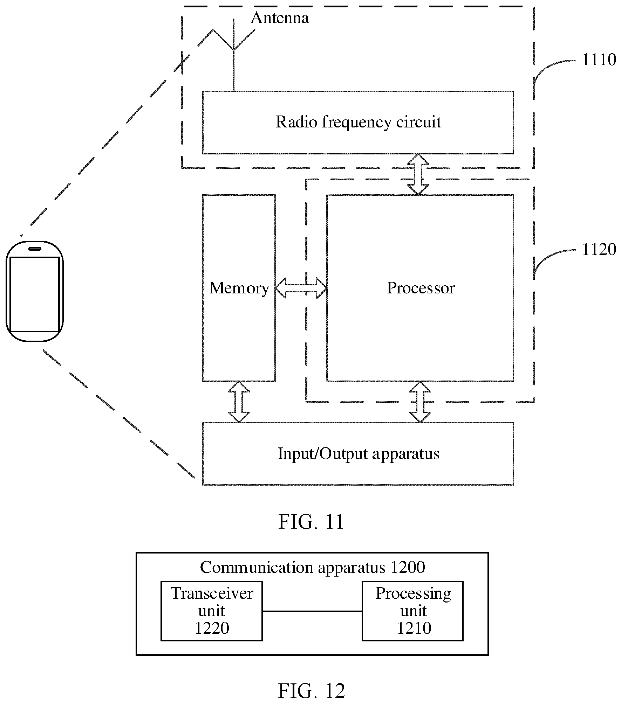

When the communication apparatus is the terminal device, FIG. 11 is a simplified schematic diagram of a structure of a terminal device. For ease of understanding and illustration, in FIG. 11, an example in which the terminal device is a mobile phone is used. As shown in FIG. 11, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device (where the transceiver unit may be one functional unit, and the functional unit can implement a sending function and a receiving function; or the transceiver unit may include two functional units: a receiving unit that can implement a receiving function and a sending unit that can implement a sending function), and the processor that has a processing function may be considered as a processing unit of the terminal device. As shown in FIG. 11, the terminal device includes a transceiver unit 1110 and a processing unit 1120. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The transceiver unit may also be sometimes referred to as a transceiver, a transceiver circuit, or the like. The receiving unit may also be sometimes referred to as a receiver, a receiver circuit, or the like. The sending unit may also be sometimes referred to as a transmitter, a transmitter circuit, or the like.

It should be understood that the transceiver unit 1110 is configured to perform a sending operation and a receiving operation on the first terminal device side or the second terminal device side in any one of the embodiment shown in FIG. 3 to the embodiment shown in FIG. 10, and the processing unit 1120 is configured to perform an operation other than the sending and receiving operations on the first terminal device side or the second terminal device side in any one of the embodiment shown in FIG. 3 to the embodiment shown in FIG. 10.

When the communication apparatus is a chip-type apparatus or the circuit, the apparatus may include a transceiver unit and a processing unit. The transceiver unit may be an input/output circuit and/or a communication interface. The processing unit is an integrated processor, a microprocessor, or an integrated circuit.

FIG. 12 is a schematic block diagram of another communication apparatus 1200 according to an embodiment of this application. For example, the communication apparatus 1200 is, for example, a terminal device or a network device. For example, the communication apparatus 1200 can implement the function of the first terminal device in the embodiment shown in FIG. 3 or the embodiment shown in FIG. 4, or implement the function of the network device in the embodiment shown in FIG. 3 or the embodiment shown in FIG. 4. Alternatively, the communication apparatus 1200 can implement the function of the second terminal device in the embodiment shown in FIG. 5 or the embodiment shown in FIG. 6, or implement the function of the network device in the embodiment shown in FIG. 5 or the embodiment shown in FIG. 6. Alternatively, the communication apparatus 1200 can implement the function of the second terminal device in any one of the embodiment shown in FIG. 7 to the embodiment shown in FIG. 9, or implement the function of the first network device in any one of the embodiment shown in FIG. 7 to the embodiment shown in FIG. 9 (where in the embodiment shown in FIG. 9, the source network device and the target network device are the same network device, and both may be referred to as the first network device). Alternatively, the communication apparatus 1200 can implement the function of the second terminal device in the embodiment shown in FIG. 10, or implement the function of the first network device in the embodiment shown in FIG. 10.

The communication apparatus 1200 includes a transceiver unit 1220 and a processing unit 1210. Optionally, the communication apparatus 1200 may further include a storage unit, and the storage unit can communicate with the processing unit 1210, and is not shown in FIG. 12. Alternatively, the communication apparatus 1200 may include no storage unit, and a storage unit may be located outside the communication apparatus 1200. For example, the communication apparatus 1200 may be the terminal device, may be a chip used in the terminal device, or may be another combined component or part that has the function of the first terminal device or the second terminal device. Alternatively, the communication apparatus 1200 may be the network device, may be a chip used in the network device, or may be another combined component or part that has the function of the network device. When the communication apparatus 1200 is the terminal device or the network device, the processing unit 1210 may include a processor, for example, a baseband processor. The baseband processor may include one or more central processing units (central processing units, CPUs). The transceiver unit 1220 may be a transceiver. The transceiver may include an antenna, a radio frequency circuit, and the like. The transceiver may include a transmitter and a receiver, and the transceiver may implement functions of the transmitter and the receiver. Alternatively, a transmitter and a receiver may be two function modules that are separately deployed, but the two function modules are collectively referred to as the transceiver in this embodiment of this application. When the communication apparatus 1200 is the part having the function of the terminal device or the network device, the transceiver unit 1220 may be a radio frequency unit, and the processing unit 1210 may be a processor, for example, a baseband processor. When the communication apparatus 1200 is a chip system, the transceiver unit 1220 may be an input/output interface of a chip (for example, a baseband chip), and the processing unit 1210 may be a processor of the chip system, and may include one or more central processing units. It should be understood that the processing unit 1210 in this embodiment of this application may be implemented by a processor or a processor-related circuit component, and the transceiver unit 1220 may be implemented by a transceiver or a transceiver-related circuit component.

In an implementation, when the communication apparatus 1200 is configured to implement the function of the first terminal device in the embodiment shown in FIG. 3, the processing unit 1210 may be configured to perform all operations other than the sending and receiving operations performed by the first terminal device in the embodiment shown in FIG. 3, for example, S308, and/or configured to support another process of the technology in this specification. The transceiver unit 1220 may be configured to perform all receiving operations and sending operations performed by the first terminal device in the embodiment shown in FIG. 3, for example, S303, S306, and S307, and/or configured to support another process of the technology in this specification.

In an implementation, when the communication apparatus 1200 is configured to implement the function of the network device in the embodiment shown in FIG. 3, the processing unit 1210 may be configured to perform all operations other than the sending and receiving operations performed by the network device in the embodiment shown in FIG. 3, for example, S305, and/or configured to support another process of the technology in this specification. The transceiver unit 1220 may be configured to perform all receiving operations and sending operations performed by the network device in the embodiment shown in FIG. 3, for example, S301, S302, S304, S306, and S307, and/or configured to support another process of the technology in this specification.

In an implementation, when the communication apparatus 1200 is configured to implement the function of the first terminal device in the embodiment shown in FIG. 4, the processing unit 1210 may be configured to perform all operations other than the sending and receiving operations performed by the first terminal device in the embodiment shown in FIG. 4, for example, S410, and/or configured to support another process of the technology in this specification. The transceiver unit 1220 may be configured to perform all receiving operations and sending operations performed by the first terminal device in the embodiment shown in FIG. 4, for example, S403, S406, S407, and S408, and/or configured to support another process of the technology in this specification.

In an implementation, when the communication apparatus 1200 is configured to implement the function of the network device in the embodiment shown in FIG. 4, the processing unit 1210 may be configured to perform all operations other than the sending and receiving operations performed by the network device in the embodiment shown in FIG. 4, for example, S405, and/or configured to support another process of the technology in this specification. The transceiver unit 1220 may be configured to perform all receiving operations and sending operations performed by the network device in the embodiment shown in FIG. 4, for example, S401, S402, S404, S406, S407, S408, and S409, and/or configured to support another process of the technology in this specification.

In an implementation, when the communication apparatus 1200 is configured to implement the function of the second terminal device in the embodiment shown in FIG. 5, the processing unit 1210 may be configured to perform all operations other than the sending and receiving operations performed by the second terminal device in the embodiment shown in FIG. 5, for example, S505, S506, and S507, and/or configured to support another process of the technology in this specification. The transceiver unit 1220 may be configured to perform all receiving operations and sending operations performed by the second terminal device in the embodiment shown in FIG. 5, for example, S501, S502, S503, and S504, and/or configured to support another process of the technology in this specification.

In an implementation, when the communication apparatus 1200 is configured to implement the function of the network device in the embodiment shown in FIG. 5, the processing unit 1210 may be configured to perform all operations other than the sending and receiving operations performed by the network device in the embodiment shown in FIG. 5, and/or configured to support another process of the technology in this specification. The transceiver unit 1220 may be configured to perform all receiving operations and sending operations performed by the network device in the embodiment shown in FIG. 5, for example, S501, S502, and S504, and/or configured to support another process of the technology in this specification.

In an implementation, when the communication apparatus 1200 is configured to implement the function of the second terminal device in the embodiment shown in FIG. 6, the processing unit 1210 may be configured to perform all operations other than the sending and receiving operations performed by the second terminal device in the embodiment shown in FIG. 6, for example, S611, and/or configured to support another process of the technology in this specification. The transceiver unit 1220 may be configured to perform all receiving operations and sending operations performed by the second terminal device in the embodiment shown in FIG. 6, for example, S601, S602, S603, S604, and S610, and/or configured to support another process of the technology in this specification.

In an implementation, when the communication apparatus 1200 is configured to implement the function of the network device in the embodiment shown in FIG. 6, the processing unit 1210 may be configured to perform all operations other than the sending and receiving operations performed by the network device in the embodiment shown in FIG. 6, for example, S605, and/or configured to support another process of the technology in this specification. The transceiver unit 1220 may be configured to perform all receiving operations and sending operations performed by the network device in the embodiment shown in FIG. 6, for example, S601, S602, S604, and S606 to S610, and/or configured to support another process of the technology in this specification.

In an implementation, when the communication apparatus 1200 is configured to implement the function of the second terminal device in the embodiment shown in FIG. 7, the processing unit 1210 may be configured to perform all operations other than the sending and receiving operations performed by the second terminal device in the embodiment shown in FIG. 7, for example, S709, S710, and S714, and/or configured to support another process of the technology in this specification. The transceiver unit 1220 may be configured to perform all receiving operations and sending operations performed by the second terminal device in the embodiment shown in FIG. 7, for example, S701, S702, S703, S704, S708, S711, S712, S713, and S715, and/or configured to support another process of the technology in this specification.

In an implementation, when the communication apparatus 1200 is configured to implement the function of the first network device in the embodiment shown in FIG. 7, the processing unit 1210 may be configured to perform all operations other than the sending and receiving operations performed by the first network device in the embodiment shown in FIG. 7, for example, S705, and/or configured to support another process of the technology in this specification. The transceiver unit 1220 may be configured to perform all receiving operations and sending operations performed by the first network device in the embodiment shown in FIG. 7, for example, S701, S702, S704, S706, S707, S708, S712, S713, and S715, and/or configured to support another process of the technology in this specification.

In an implementation, when the communication apparatus 1200 is configured to implement the function of the second terminal device in the embodiment shown in FIG. 8, the processing unit 1210 may be configured to perform all operations other than the sending and receiving operations performed by the second terminal device in the embodiment shown in FIG. 8, for example, S811, S812, and S816, and/or configured to support another process of the technology in this specification. The transceiver unit 1220 may be configured to perform all receiving operations and sending operations performed by the second terminal device in the embodiment shown in FIG. 8, for example, S801, S802, S803, S804, S810, S813, S814, S815, and S817, and/or configured to support another process of the technology in this specification.

In an implementation, when the communication apparatus 1200 is configured to implement the function of the first network device in the embodiment shown in FIG. 8, the processing unit 1210 may be configured to perform all operations other than the sending and receiving operations performed by the first network device in the embodiment shown in FIG. 8, for example, S805, and/or configured to support another process of the technology in this specification. The transceiver unit 1220 may be configured to perform all receiving operations and sending operations performed by the first network device in the embodiment shown in FIG. 8, for example, S801, S802, S804, S806, S809, S810, SS814, S815, and S817, and/or configured to support another process of the technology in this specification.

In an implementation, when the communication apparatus 1200 is configured to implement the function of the second terminal device in the embodiment shown in FIG. 9, the processing unit 1210 may be configured to perform all operations other than the sending and receiving operations performed by the second terminal device in the embodiment shown in FIG. 9, for example, S911 and S914, and/or configured to support another process of the technology in this specification. The transceiver unit 1220 may be configured to perform all receiving operations and sending operations performed by the second terminal device in the embodiment shown in FIG. 9, for example, S901, S902, S903, S904, S910, S912, S913, and S915, and/or configured to support another process of the technology in this specification.

In an implementation, when the communication apparatus 1200 is configured to implement the function of the first network device in the embodiment shown in FIG. 9, the processing unit 1210 may be configured to perform all operations other than the sending and receiving operations performed by the first network device in the embodiment shown in FIG. 9, for example, S905, and/or configured to support another process of the technology in this specification. The transceiver unit 1220 may be configured to perform all receiving operations and sending operations performed by the first network device in the embodiment shown in FIG. 9, for example, S901, S902, S904, S906 to S910, S912, S913, and S915, and/or configured to support another process of the technology in this specification.

In an implementation, when the communication apparatus 1200 is configured to implement the function of the second terminal device in the embodiment shown in FIG. 10, the processing unit 1210 may be configured to perform all operations other than the sending and receiving operations performed by the second terminal device in the embodiment shown in FIG. 10, for example, S1011, S1012, and S1016, and/or configured to support another process of the technology in this specification. The transceiver unit 1220 may be configured to perform all receiving operations and sending operations performed by the second terminal device in the embodiment shown in FIG. 10, for example, S1001, S1002, S1003, S1004, S1010, S1013, S1013a, S1013b, S1013c, S1014, S1015, and S1017, and/or configured to support another process of the technology in this specification.

In an implementation, when the communication apparatus 1200 is configured to implement the function of the first network device in the embodiment shown in FIG. 10, the processing unit 1210 may be configured to perform all operations other than the sending and receiving operations performed by the first network device in the embodiment shown in FIG. 10, for example, S1005, and/or configured to support another process of the technology in this specification. The transceiver unit 1220 may be configured to perform all receiving operations and sending operations performed by the first network device in the embodiment shown in FIG. 10, for example, S1001, S1002, S1003, S1004, S1010, S1013, S1013a, S1013b, S1013c, S1014, S1015, and S1017, and/or configured to support another process of the technology in this specification.

In addition, the transceiver unit 1220 may be one function module, and the function module can complete both a sending operation and a receiving operation. For example, the transceiver unit 1220 may be configured to perform all sending operations and receiving operations performed by the terminal device or the network device in any one of the embodiment shown in FIG. 3 to the embodiment shown in FIG. 10. For example, when performing the receiving operation, the transceiver unit 1220 may be considered as a receiving unit; and when performing the sending operation, the transceiver unit 1220 may be considered as a sending unit. Alternatively, the transceiver unit 1220 may be two function modules. The transceiver unit 1220 may be considered as a general term of the two function modules. The two function modules include a receiving unit and a sending unit. The sending unit is configured to complete a sending operation. For example, the sending unit may be configured to perform all sending operations performed by the terminal device or the network device in any one of the embodiment shown in FIG. 3 to the embodiment shown in FIG. 10. The receiving unit is configured to complete a receiving operation. For example, the receiving unit may be configured to perform all receiving operations performed by the terminal device or the network device in any one of the embodiment shown in FIG. 3 to the embodiment shown in FIG. 10.

For specific functions that can be implemented by the processing unit 1210 and the transceiver unit 1220, refer to the descriptions of the operations performed by the terminal device in any one of the embodiment shown in FIG. 3 to the embodiment shown in FIG. 10, or refer to the descriptions of the operations performed by the network device in any one of the embodiment shown in FIG. 3 to the embodiment shown in FIG. 10. Details are not described again.

It should be understood that the processor mentioned in embodiments of this application may be a CPU, or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory in this specification aims to include but is not limited to these memories and any memory of another appropriate type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the functions for each particular application, but it should not be considered that the implementation goes beyond the scope of this application.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing computer-readable storage medium may be any available medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another compact disc storage, a magnetic disk storage medium, another magnetic storage device, or any other medium that can be for carrying or storing expected program code in a form of instructions or a data structure and that can be accessed by a computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, applied to a second terminal device, comprising
receiving configuration information from a first network device, wherein the configuration information is for configuring the second terminal device to switch to communicate with a third network device via a first terminal device, the configuration information comprises information about a first timer, and the information about the first timer is for a path switch;
starting the first timer; and
sending an RRC reconfiguration complete message to the first terminal device.

2. The method according to claim 1, wherein the RRC reconfiguration complete message is communicated by using a default PC5 RLC configuration.

3. The method according to claim 1 or 2, wherein the RRC reconfiguration complete message is for triggering the first terminal device in an RRC idle state or an RRC inactive state to enter an RRC connected state.

4. The method according to any one of claims 1 to 3, further comprises:
the RRC reconfiguration complete message is an RRC reconfiguration complete message sent by the second terminal device to the third network device.

5. The method according to any one of claims 1 to 4, wherein the configuration information comprises the information about the first timer, and the method further comprises:
configuring, by the second terminal device, the first timer based on the information about the first timer.

6. The method according to any one of claims 1 to 5, wherein the method further comprises:
stopping the first timer when one or more of the following conditions are satisfied:
establishment of a PC5 connection between the second terminal device and the first terminal device is completed;
the second terminal device succeeds in random access to the third network device;
the second terminal device sends the RRC reconfiguration complete message to a lower layer of the second terminal device, and receives an acknowledgement feedback from the lower layer, wherein the lower layer is an RLC layer;
the second terminal device receives second indication information from the third network device, wherein the second indication information indicates the second terminal device to stop the first timer;
the second terminal device receives third indication information from the first terminal device, wherein the third indication information indicates the second terminal device to stop the first timer, or the third indication information indicates that the first terminal device succeeds in random accesses to the third network device;
the second terminal device receives fourth indication information from the first terminal device, wherein the fourth indication information indicates that a Uu radio link failure occurs on the first terminal device or that the first terminal device fails in random access to the third network device; or
establishment of a PC5 connection between the second terminal device and the first terminal device fails, or a PC5 radio link failure is determined.

7. The method according to any one of claims 1 to 5, wherein the method further comprises:
performing reestablishment when the first timer expires.

8. The method according to claim 7, wherein the performing reestablishment comprises:
performing reestablishment by using a relay device; or
performing reestablishment by using a cell.

9. The method according to any one of claims 1 to 8, wherein
the first network device and the third network device are a same network device; or
the first network device and the third network device are different network devices.

10. A communication method, applied to a first terminal device, comprising
establishing a PC5-S connection to a second terminal device, wherein the first terminal device is in an RRC idle state or an RRC inactive state, and the PC5-S connection is used by the second terminal device to communicate with a third network device via the first terminal device;
receiving an RRC reconfiguration complete message from the second terminal device by using a default PC5 RLC configuration, wherein the RRC reconfiguration complete message is for triggering the first terminal device in the RRC idle state or the RRC inactive state to enter an RRC connected state;
entering the RRC connected state; and
sending the RRC reconfiguration complete message to the third network device.

11. The method according to claim 10, wherein the first terminal device comprises a PC5 RLC entity, and the method further comprises:
sending, by the PC5 RLC entity to a PC5 RLC entity of the second terminal device, a receiving acknowledgement feedback of an RLC PDU corresponding to the RRC reconfiguration complete message.

12. A communication method, applied to a first network device, comprising
sending configuration information to a second terminal device, wherein the configuration information is for configuring the second terminal device to switch to communicate with a third network device via a first terminal device, the configuration information comprises information about a first timer, and the information about the first timer is for a path switch.

13. The method according to claim 12, wherein
the information about the first timer is for configuring the first timer, and the second terminal device determines, when the first timer expires, that the path switch fails.

14. A communication method, wherein the method is applied to a first terminal device, and the method comprises:
receiving a first message from a network device, wherein the first message is for querying whether the first terminal device is capable of providing a relay service; or the first message comprises configuration information, and the configuration information is for configuring the first terminal device to provide a relay service for a second terminal device; and
sending a second message to the network device, wherein
when the first message is for querying whether the first terminal device is capable of providing provide the relay service, the second message indicates whether the first terminal device is capable of providing provide the relay service; or
when the first message comprises the configuration information, the second message indicates whether configuration of the first terminal device is completed, or the second message indicates whether the first terminal device is capable of providing provide the relay service.

15. The method according to claim 14, wherein the second message indicates that the first terminal device determines that the configuration fails, or indicates that the first terminal device refuses to provide the relay service for the second terminal device, and the method further comprises:
skipping initiating a radio resource control RRC reestablishment process.

16. The method according to claim 14 or 15, wherein when the first message is for querying whether the first terminal device is capable of providing provide the relay service, the first message comprises one or more of the following:
an identifier of the second terminal device;
integrity protection algorithm information or integrity protection rate information;
encryption algorithm information or encryption rate information;
a PC5 5G quality of service identifier PQI or a 5G quality of service identifier 5QI;
quality of service QoS;
network slice information; or
computing capability information.

17. The method according to any one of claims 14 to 16, wherein the second message indicates that the configuration of the first terminal device fails, or indicates that the first terminal device refuses to provide the relay service, the second message further comprises a cause value, and the cause value indicates a cause of refusing, by the first terminal device, to provide the relay service.

18. The method according to claim 17, wherein the cause of refusing, by the first terminal device, to provide the relay service comprises one or more of the following:
the first terminal device does not support a configuration that is of a Uu interface and that is comprised in the first message;
the first terminal device does not support a configuration that is of a PC5 interface and that is comprised in the first message;
admission control performed by the first terminal device on the second terminal device fails;
the first terminal device does not support an integrity protection algorithm information comprised in the first message;
the first terminal device does not support the 5QI or the PQI comprised in the first message;
the first terminal device cannot identify a QoS flow ID indicated by the first message;
the first terminal device does not support a network slice indicated by the first message;
battery power of the first terminal device is insufficient;
a packet data convergence protocol PDCP of the first terminal device is overloaded; or
the first terminal device does not support a computing capability indicated by the first message.

19. The method according to any one of claims 14 to 18, wherein the first message is for querying whether the first terminal device is capable of providing provide the relay service, the second message indicates that the first terminal device is capable of providing provide the relay service, and the method further comprises:
receiving the configuration information from the network device; and
performing configuration based on the configuration information, to provide the relay service.

20. The method according to any one of claims 14 to 19, wherein
the first message is an RRC reconfiguration message, or a message specially for querying whether a terminal device is capable of providing provide the relay service.

21. The method according to any one of claims 14 to 20, wherein
the second message is an RRC reconfiguration complete message, or a message specially for indicating whether the terminal device provides the relay service.

22. The method according to any one of claims 14 to 21, wherein when the second message indicates that the configuration fails, the second message is a failure information message or a sidelink user equipment information SUI message.

23. A communication method, comprising:
sending a first message to a first terminal device, wherein the first message is for querying whether the first terminal device is capable of providing provide a relay service; or the first message comprises configuration information, and the configuration information is for configuring the first terminal device to provide a relay service for a second terminal device; and
receiving a second message from the first terminal device, wherein
when the first message is for querying whether the first terminal device is capable of providing provide the relay service, the second message indicates whether the first terminal device is capable of providing provide the relay service; or
when the first message comprises the configuration information, the second message indicates whether configuration of the first terminal device is completed, or the second message indicates whether the first terminal device is capable of providing provide the relay service.

24. The method according to claim 23, wherein the method further comprises:
determining that the first terminal device does not perform RRC reestablishment.

25. The method according to claim 23 or 24, wherein when the first message is for querying whether the first terminal device is capable of providing provide the relay service, the first message comprises one or more of the following:
an identifier of the second terminal device;
a PC5 or Uu interface parameter;
integrity protection algorithm information or integrity protection rate information;
encryption algorithm information or encryption rate information;
a PQI or a 5QI;
QoS;
network slice information; or
computing capability information.

26. The method according to any one of claims 23 to 25, wherein the second message indicates that the configuration of the first terminal device fails, or indicates that the first terminal device refuses to provide the relay service, the second message further comprises a cause value, and the cause value indicates a cause of refusing, by the first terminal device, to provide the relay service.

27. The method according to claim 26, wherein the cause of refusing, by the first terminal device, to provide the relay service comprises one or more of the following:
the first terminal device does not support a configuration that is of a Uu interface and that is comprised in the first message;
the first terminal device does not support a configuration that is of a PC5 interface and that is comprised in the first message;
admission control performed by the first terminal device on the second terminal device fails;
the first terminal device does not support the integrity protection algorithm information comprised in the first message;
the first terminal device does not support the 5QI or the PQI comprised in the first message;
the first terminal device cannot identify a QoS flow ID indicated by the first message;
the first terminal device does not support a network slice indicated by the first message;
battery power of the first terminal device is insufficient;
a PDCP of the first terminal device is overloaded; or
the first terminal device does not support a computing capability indicated by the first message.

28. The method according to any one of claims 23 to 27, wherein the first message is for querying whether the first terminal device is capable of providing provide the relay service, the second message indicates that the first terminal device is capable of providing provide the relay service, and the method further comprises:
sending the configuration information to the first terminal device.

29. The method according to any one of claims 23 to 28, wherein
the first message is an RRC reconfiguration message.

30. The method according to any one of claims 23 to 29, wherein
the second message is an RRC reconfiguration complete message, or a message specially for indicating whether a terminal device provides the relay service.

31. The method according to any one of claims 23 to 30, wherein when the second message indicates that the configuration fails, the second message is a failure information message or a sidelink user equipment information SUI message.

32. The method according to any one of claims 23 to 31, wherein the second message indicates that the first terminal device refuses to provide the relay service, and the method further comprises:
sending a third message to the second terminal device, wherein the third message indicates that the first terminal device refuses to provide the relay service, or indicates to reselect a terminal device that is capable of providing provide the relay service.

33. The method according to claim 32, wherein the third message further comprises information about one or more terminal devices, and the one or more terminal devices cannot provide the relay service.

34. The method according to any one of claims 23 to 33, wherein the method further comprises:
receiving a fourth message from the second terminal device, wherein the fourth message indicates an energy saving requirement; and
sending first information to the second terminal device, wherein the first information comprises information about M terminal devices, the M terminal devices do not need to be measured, or refuse to provide the relay service, and M is a positive integer.

35. The method according to claim 34, wherein the fourth message further comprises second information, the second information comprises information about N terminal devices, the N terminal devices refuse to provide the relay service, and N is a positive integer.

36. A communication apparatus, comprising a transceiver unit and a processing unit, wherein the transceiver unit is coupled to the processing unit, and the communication apparatus is capable of providing perform the method according to any one of claims 1 to 35.

37. A computer-readable storage medium, wherein the computer-readable storage medium is configured to store a computer program; and when the computer program is run on a computer, the computer is enabled to perform the method according to any one of claims 1 to 35.
